# EUROPEAN PATENT SPECIFICATION

(11) **EP 4 450 890 B1**
(45) Date of publication and mention of the grant of the patent: **17.12.2025**
(21) Application number: 22906972.9
(22) Date of filing: 04.10.2022
(51) Int. Cl.: F24F 12/00, F28G 1/16, F24F 5/00, F24F 11/49, F24F 11/61, F24F 11/63, F24F 110/60, F24F 110/65, F24F 120/14, F24F 1/18, F24F 7/007, F24F 7/08

(54) **VENTILATION DEVICE AND CONTROL METHOD FOR VENTILATION DEVICE**
BELÜFTUNGSVORRICHTUNG UND STEUERUNGSVERFAHREN FÜR BELÜFTUNGSVORRICHTUNG
DISPOSITIF DE VENTILATION ET PROCÉDÉ DE COMMANDE POUR DISPOSITIF DE VENTILATION

(30) Priority: 17.12.2021 JP 2021205604
(43) Date of publication of application: 23.10.2024
(73) Proprietor: DAIKIN INDUSTRIES, LTD., Osaka-shi, Osaka 530-0001 (JP)
(72) Inventor: ODO, Tsunahiro, Osaka-shi, Osaka 530-0001 (JP); TAKAHASHI, Takashi, Osaka-shi, Osaka 530-0001 (JP); TSURUZONO, Shota, Osaka-shi, Osaka 530-0001 (JP)
(74) Representative: Goddar, Heinz J.
(86) International application number: PCT/JP2022/037105
(87) International publication number: WO 2023/112437

(56) References cited:
- WO-A1-2007/138954
- CN-A- 111 947 281
- JP-A- 2001 355 904
- JP-A- 2004 037 036
- JP-A- 2004 144 401
- JP-A- 2004 144 401
- JP-A- 2018 189 257
- JP-A- 2021 038 868
- JP-B2- 6 352 038

## Description

### Technical Field

The present invention relates to a ventilation apparatus and a control method of a ventilation apparatus.

### Background Art

JP 2004 144401 A discloses a waste heat collection device which collects waste heat when discharging the indoor air in a building to the outside and uses the collected waste heat to warm the outside air that is supplied into the building.

JP 2004 144401 A discloses that soiling is easily attached to the outer periphery of a heat exchanger because the heat exchanging unit on the exhaust side collects waste heat from the indoor air that is discharged from a kitchen, and that the heat exchanging unit has a cleaning mechanism which discharges a cleaning liquid into the heat exchanger to clean the heat exchanger.

JP 2004 144401 A discloses a ventilation apparatus comprising a compressor, a first heat exchanger provided on a first path through which air is supplied from outdoors to indoors, a second heat exchanger provided on a second path through which air is exhausted from the indoors to the outdoors, a refrigerant circuit through which a refrigerant flows inside, the refrigerant circuit being connected to the compressor, the first heat exchanger, and the second heat exchanger by a refrigerant pipe, and a control unit configured to implement control to clean the second heat exchanger according to a result of estimating the soiling state.

JP 6 352038 B2 discloses determining contamination based on a physical quantity that changes due to pressure loss when air passes through the heat exchanger. The physical quantity refers to a mechanical parameter such as air pressure or air velocity, measured using a pressure sensor. Said document aims to detect fouling based on mechanical resistance to air flow, particularly after drying the heat exchanger to remove condensation, in order to eliminate variations caused by moisture.

### Summary of Invention

### Technical Problem

Heat exchangers, especially heat exchangers using copper pipes, may corrode due to the attachment of chemical substances in air. Further, when corrosion proceeds in heat exchangers, holes may be formed in the pipes, thereby causing gas leakage.

The present invention provides a ventilation apparatus and a method of controlling the ventilation apparatus for preventing the exhaust heat exchanger from becoming soiled by return air.

### Solution to Problem

The present invention provides a ventilation apparatus according to claim 1.

According to the ventilation apparatus of the present invention, soiling of the exhaust heat exchanger by the return air can be prevented.

In the above ventilation apparatus, the control unit may be configured to estimate the soiling state based on an elapsed time after cleaning the second heat exchanger previously.

In the above ventilation apparatus, the control unit may be configured to estimate the soiling state based on an amount of air passing through the second heat exchanger after cleaning the second heat exchanger previously.

In the above ventilation apparatus,
a fan configured to blow air to the second heat exchanger may be provided, wherein
the control unit may be configured to estimate the soiling state based on integrated power of the fan after cleaning the second heat exchanger previously.

In the above ventilation apparatus of the present invention, the control unit is configured to estimate a concentration of a chemical substance in air, and to estimate the soiling state based on the estimated concentration.

In the above ventilation apparatus, the second path may be connected to a toilet room provided in the indoors, and
the control unit may estimate the concentration based on a usage frequency of using the toilet room.

In the above ventilation apparatus, the control unit may be configured to estimate the soiling state based on the concentration and an elapsed time after cleaning the second heat exchanger previously or an amount of air passing through the second heat exchanger after cleaning the second heat exchanger previously.

In the above ventilation apparatus, the control unit may be configured to estimate the usage frequency of using the toilet room based on a number of times of detection by a human presence sensor provided in the toilet room or a number times of washing hands at a sink provided in the toilet room or a number of times of flushing a toilet bowl in the toilet room.

In the above ventilation apparatus,
an odor sensor may be provided on the second path, wherein
the control unit may be configured to estimate the soiling state based on a result of detection by the odor sensor.

In the above ventilation apparatus, the control unit may control the refrigerant circuit so as to cause condensation at the second heat exchanger when implementing control to clean the second heat exchanger.

In the above ventilation apparatus,
a water supplying unit may be provided above the second heat exchanger, wherein
the control unit may be configured to control water to be supplied from the water supplying unit to the second heat exchanger when implementing control to clean the second heat exchanger.

In the above ventilation apparatus,
the second heat exchanger may include a plurality of fins and a plurality of pipes through which the refrigerant flows, the plurality of pipes penetrating the plurality of fins, wherein
a first pipe included in the plurality of pipes may be arranged to be shifted in a lateral direction as viewed from above with respect to all second pipes included in the plurality of pipes that are positioned above the first pipe.

In the above ventilation apparatus, the water supplying unit may be a tray provided with a plurality of water supply holes.

In the above ventilation apparatus,
the water supplying unit may include a plurality of tubes, and
each of the plurality of tubes may include a plurality of water supply holes.

In the above ventilation apparatus,
a third heat exchanger may be provided on a third path through which air is exhausted from the indoors to the outdoors, the third path being different from the second path.

In the above ventilation apparatus, the control unit may control a refrigerant evaporation temperature in the second heat exchanger to be lower than a refrigerant evaporation temperature in the third heat exchanger.

Further, the present invention provides a control method of a ventilation apparatus according to claim 16.

According to the control method of the ventilation apparatus of the present invention, soiling of an exhaust heat exchanger by return air can be prevented.

### Brief Description of Drawings

[FIG. 1] FIG. 1 is a plan view for explaining the state of use of the ventilation apparatus according to the present embodiment.
[FIG. 2] FIG. 2 is a side view for explaining the state of use of the ventilation apparatus according to the present embodiment.
[FIG. 3] FIG. 3 is a diagram illustrating a schematic configuration of the ventilation apparatus according to the present embodiment.
[FIG. 4] FIG. 4 is a functional block diagram of the ventilation apparatus according to the present embodiment.
[FIG. 5] FIG. 5 is a flowchart illustrating the processing of the ventilation apparatus according to the present embodiment.
[FIG. 6] FIG. 6 is a flowchart illustrating the soiling state estimation processing of the ventilation apparatus according to the present embodiment.
[FIG. 7] FIG. 7 is a flowchart illustrating the soiling state estimation processing of the ventilation apparatus according to the present embodiment.
[FIG. 8] FIG. 8 is a flowchart illustrating the ventilation apparatus according to the present embodiment.
[FIG. 10] FIG. 10 is a flowchart illustrating the soiling state estimation processing of the ventilation apparatus according to the present embodiment.
[FIG. 11] FIG. 11 is a flowchart illustrating the soiling state estimation processing of the ventilation apparatus according to the present embodiment.
[FIG. 12] FIG. 12 is a flowchart illustrating the cleaning processing of the ventilation apparatus according to the present embodiment.
[FIG. 13] FIG. 13 is a flowchart illustrating the cleaning processing of the ventilation apparatus according to the present embodiment.
[FIG. 14] FIG. 14 is a diagram for explaining a configuration of an exhaust heat exchanger of a ventilation apparatus according to the present embodiment.
[FIG. 15] FIG. 15 is a diagram for explaining a configuration of an exhaust heat exchanger of a ventilation apparatus of a comparative example.
[FIG. 16] FIG. 16 is a diagram for explaining a cleaning state of an exhaust heat exchanger of a ventilation apparatus according to the present embodiment.
[FIG. 17] FIG. 17 is a diagram for explaining a cleaning state of an exhaust heat exchanger of a ventilation apparatus of a comparative example.
[FIG. 18] FIG. 18 is a diagram for explaining a structure of a water supplying unit for cleaning an exhaust heat exchanger of a ventilation apparatus according to the present embodiment.
[FIG. 19] FIG. 19 is a diagram for explaining a structure of a water supplying unit for cleaning an exhaust heat exchanger of a ventilation apparatus according to the present embodiment.
[FIG. 20] FIG. 20 is a diagram for explaining the cleaning of an exhaust heat exchanger of a ventilation system of a comparative example.
[FIG. 21] FIG. 21 is a diagram for explaining a state of use of a modified example of the ventilation apparatus according to the present embodiment in planar view.
[FIG. 22] FIG. 22 illustrates a schematic configuration of a modified example of the ventilation apparatus according to the present embodiment.

### Description of Embodiments

Embodiments will now be described with reference to the accompanying drawings. Note that, in the descriptions in the specification and drawings according to each embodiment, with regard to elements having substantially the same or corresponding functional configurations, overlapping descriptions may be omitted by assigning the same reference numerals. Further, to facilitate understanding, the scale of each element in the drawings may be different from the actual scale.

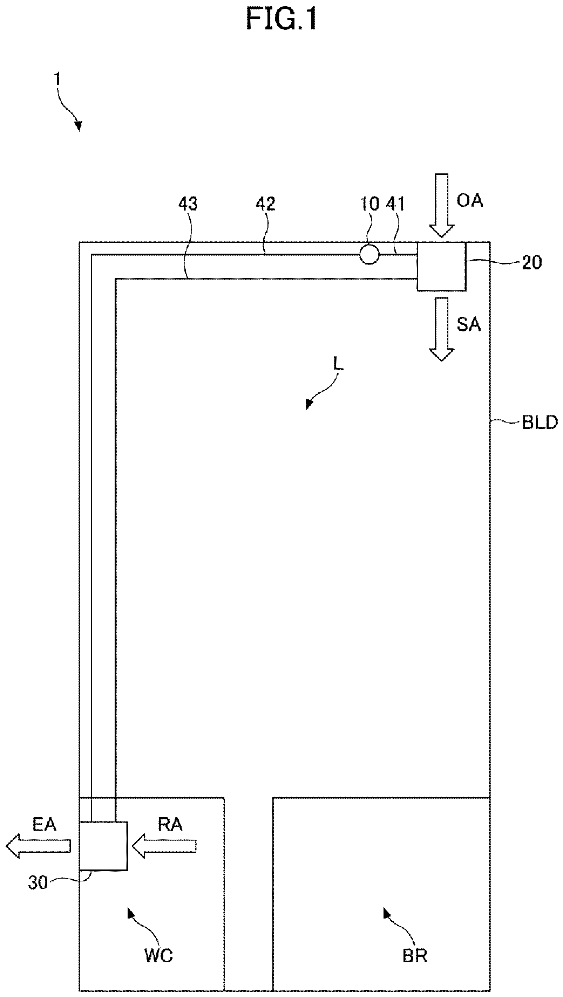

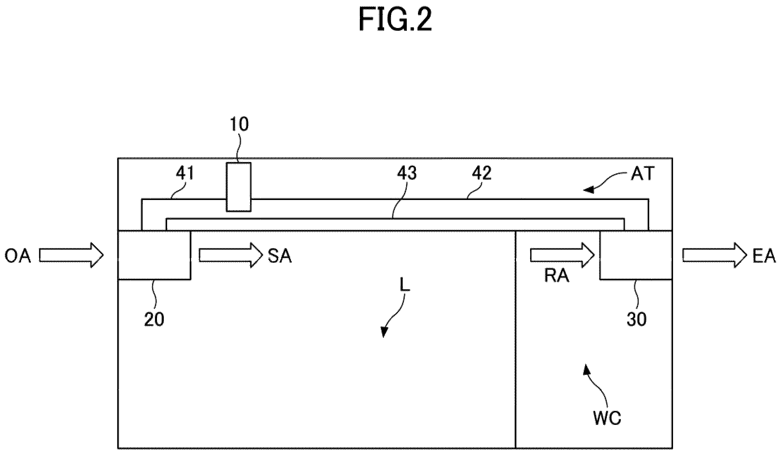

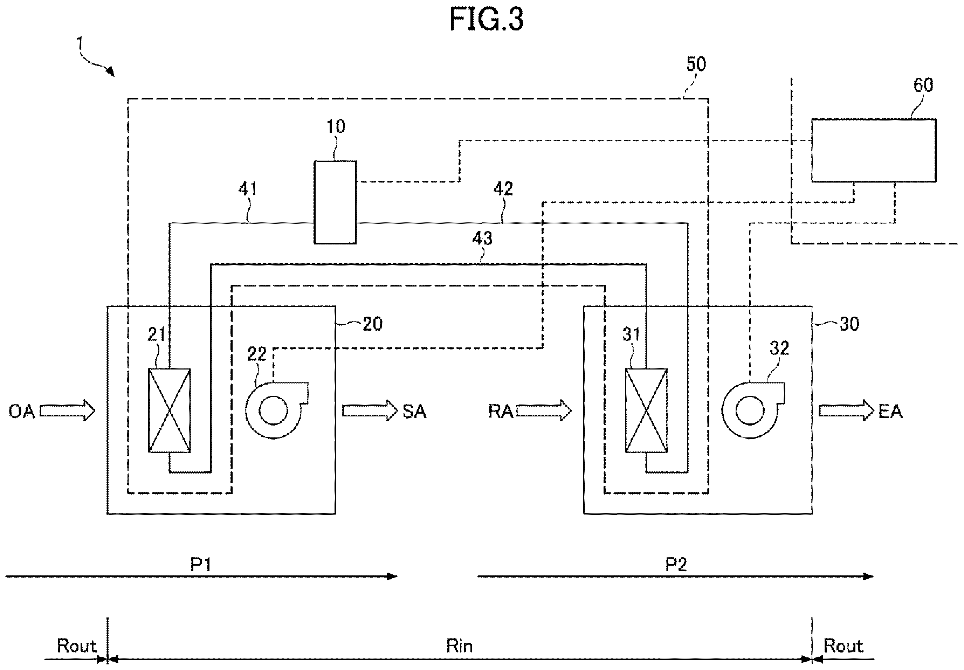

In FIG. 1, a ventilation apparatus 1 supplies air from the outside of a building BLD to the inside of the building BLD, for example, into a living room L. The ventilation apparatus 1 also exhausts air from the inside of the building BLD to the outside of the building BLD. FIG. 1 is a plan view for describing the use state of the ventilation apparatus 1 according to the present embodiment. FIG. 2 is a side view for describing the use state of the ventilation apparatus 1 according to the present embodiment. FIG. 3 is a diagram illustrating a schematic configuration of the ventilation apparatus 1 according to the present embodiment.

The ventilation apparatus 1 according to the present embodiment includes a compressor 10, an air supply unit 20, and an exhaust unit 30. The ventilation apparatus 1 includes a refrigerant pipe 41, a refrigerant pipe 42, and a refrigerant pipe 43. Further, the ventilation apparatus 1 includes a control unit 60 for controlling the entire ventilation apparatus 1. The compressor 10, an air supply heat exchanger 21 of the air supply unit 20 described later, an exhaust heat exchanger 31 of the exhaust unit 30 described later, the refrigerant pipe 41, the refrigerant pipe 42, and the refrigerant pipe 43 may be collectively referred to as a refrigerant circuit 50.

The air that the air supply unit 20 takes in from the outside of the building BLD is referred to as Outdoor Air (OA). The air that the air supply unit 20 sends into the inside of the building BLD is referred to as Supply Air (SA). The air that the exhaust unit 30 takes in from the inside of the building BLD is referred to as Return Air (RA). The air that the exhaust unit 30 exhausts to the outside of the building BLD is referred to as Exhaust Air (EA).

The air supply unit 20 of the ventilation apparatus 1 is provided on the ceiling of the living room L. The air supply unit 20 takes in the outside air OA from the outside of the building BLD and supplies the air supply SA to the living room L.

The exhaust unit 30 of the ventilation apparatus 1 is provided on the ceiling of the toilet room WC. The exhaust unit 30 takes the return air RA from the inside of the building BLD, specifically the toilet room WC, and exhausts the exhaust air EA to the outside of the building BLD. The exhaust unit 30 exhausts the indoor air of the building BLD to the outside of the building BLD, and, therefore, the exhaust unit 30 is particularly desirably be provided in a place where the indoor air is easily soiled, for example, a toilet or a kitchen.

In the ventilation apparatus 1 illustrated in FIGS. 1 and 2, the air supply unit 20 and the exhaust unit 30 are provided in different rooms; however, the air supply unit 20 and the exhaust unit 30 may be provided in the same room, for example, a toilet room WC.

The exhaust unit 30 is provided in the toilet room WC and takes in the return air RA from the toilet room WC. For example, a duct may be provided from the exhaust unit 30 to the bathroom BR to take in the return air RA from the bathroom BR in addition to the return air RA from the toilet room WC.

The compressor 10, the refrigerant pipe 41, the refrigerant pipe 42, and the refrigerant pipe 43 are provided in the attic AT of the building BLD.

In the above description, the places where the air supply unit 20 and the exhaust unit 30 are installed are examples, and for example, the air supply unit 20 and the exhaust unit 30 may be installed in a kitchen, a bedroom, a storage room, a dressing room, a locker room, or the like. For example, the air supply unit 20 and the exhaust unit 30 may be installed in a business building, a warehouse, or the like; not only in a residential building.

Each element constituting the ventilation apparatus 1 will be described below.

### [Compressor 10]

The compressor 10 compresses the refrigerant flowing through the refrigerant circuit 50. For example, in summer, when the indoor temperature of the building BLD is lower than the outdoor temperature due to a cooling device, the compressor 10 supplies the compressed refrigerant to the exhaust unit 30. In winter, for example, when the indoor temperature of the building BLD is higher than the outdoor temperature due to a heater or the like, the compressor 10 supplies the compressed refrigerant to the air supply unit 20.

The compressor 10 is connected to the control unit 60. The control unit 60 controls the compressor 10.

### [Air supply unit 20]

The air supply unit 20 takes in the outside air OA from the outside of the building BLD, performs heat exchange between the taken in outside air OA and the refrigerant, and supplies the outside air OA after the heat exchange to the inside of the building BLD as the air supply SA. The air supply unit 20 includes the air supply heat exchanger 21 and a fan 22. The path in which the outside air OA, which is the outdoor air of the building BLD, is supplied to the interior of the building BLD as the air supply SA via the air supply unit 20 is referred to as the air supply path P1. In FIG. 3, the exterior of the building BLD is illustrated as the area Rout, and the interior of the building BLD is illustrated as the area Rin.

The air supply heat exchanger 21 performs heat exchange between the outside air OA and the refrigerant. The air supply heat exchanger 21 includes a plurality of plate type fins and a pipe through which the refrigerant flows, the pipe penetrating through the fins.

The air supply heat exchanger 21 is connected to the compressor 10 through the refrigerant pipe 41 and to the exhaust heat exchanger 31 provided in the exhaust unit 30 through the refrigerant pipe 43, whereby the refrigerant flows through the pipe of the air supply heat exchanger 21. As the outside air OA flows between the fins of the air supply heat exchanger 21, heat exchange is performed between the outside air OA and the refrigerant flowing through the pipe of the air supply heat exchanger 21.

The fan 22 blows the outside air OA that has undergone heat exchange by the air supply heat exchanger 21, into the interior of the building BLD. The fan 22 is, for example, a centrifugal fan or an axial fan. The fan 22 is connected to the control unit 60. The control unit 60 controls the fan 22.

The outside air OA in which heat is exchanged with a refrigerant by the air supply heat exchanger 21 is blown indoors of a building BLD as an air supply SA by the fan 22.

With regard to the arrangement of the air supply heat exchanger 21 and the fan 22, the outside air OA may be blown from the fan 22 to the air supply heat exchanger 21.

### [Exhaust unit 30]

The exhaust unit 30 takes in the return air RA from the inside of the building BLD, performs heat exchange between the taken in return air RA and the refrigerant, and exhausts the return air RA after heat exchange to the outside of the building BLD as the exhaust air EA. The exhaust unit 30 includes the exhaust heat exchanger 31 and a fan 32. The path in which the return air RA, which is the indoor air of the building BLD, is exhausted to the outside of the building BLD as the exhaust air EA via the exhaust unit 30, is referred to as the exhaust path P2.

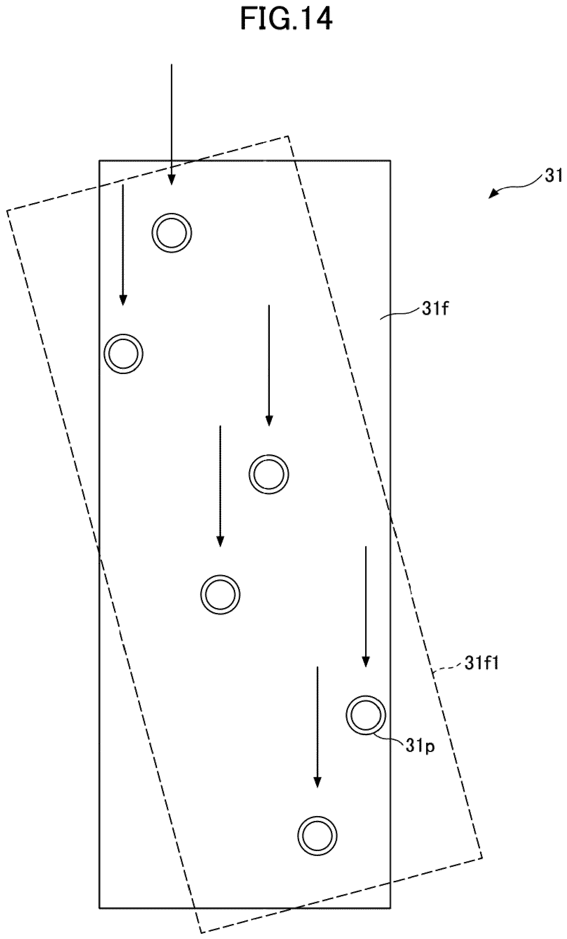

The exhaust heat exchanger 31 exchanges heat between the return air RA and the refrigerant. The exhaust heat exchanger 31 includes a plurality of plate-type fins and a pipe through which the refrigerant flows, the pipe penetrating through the fins (see FIGS. 14, 18, and 19).

The exhaust heat exchanger 31 is connected to the compressor 10 through the refrigerant pipe 42 and to the air supply heat exchanger 21 provided in the air supply unit 20 through the refrigerant pipe 43, whereby the refrigerant flows in the pipe of the exhaust heat exchanger 31. As the return air RA flows between the fins of the exhaust heat exchanger 31, heat exchange is performed between the return air RA and the refrigerant flowing in the pipe of the exhaust heat exchanger 31.

The fan 32 blows the return air RA that has undergone heat exchange by the exhaust heat exchanger 31, to the outside of the building BLD. The fan 32 is, for example, a centrifugal fan or an axial fan. The fan 32 is connected to the control unit 60. The control unit 60 controls the fan 32.

The return air RA in which heat is exchanged with the refrigerant by the exhaust heat exchanger 31 is blown to the outside of the building BLD as exhaust air EA by the fan 32.

With regard to the arrangement of the exhaust heat exchanger 31 and the fan 32, the return air RA may be blown from the fan 32 to the exhaust heat exchanger 31.

### [Refrigerant pipe 41, refrigerant pipe 42, and refrigerant pipe 43]

The refrigerant pipe 41 connects the compressor 10 to the air supply unit 20, and more specifically, connects the compressor 10 to the air supply heat exchanger 21 provided in the air supply unit 20. The refrigerant pipe 42 connects the compressor 10 to the exhaust unit 30, and more specifically, connects the compressor 10 to the exhaust heat exchanger 31 provided in the exhaust unit 30. The refrigerant pipe 43 connects the air supply unit 20 to the exhaust unit 30, and more specifically, connects the air supply heat exchanger 21 provided in the air supply unit 20 to the exhaust heat exchanger 31 provided in the exhaust unit 30.

### [Refrigerant circuit 50]

The refrigerant circuit 50 includes the compressor 10, the air supply heat exchanger 21, the exhaust heat exchanger 31, the refrigerant pipe 41, the refrigerant pipe 42, and the refrigerant pipe 43. In the refrigerant circuit 50, the compressor 10, the air supply heat exchanger 21, and the exhaust heat exchanger 31 are connected by the refrigerant pipe 41, the refrigerant pipe 42, and the refrigerant pipe 43, and refrigerant flows inside the refrigerant circuit 50.

The operation of the refrigerant circuit 50 will be described below. For example, in summer, when the indoor temperature of the building BLD is lower than the outdoor temperature due to a cooling device, the compressor 10 supplies the compressed refrigerant to the exhaust unit 30. The exhaust heat exchanger 31 provided in the exhaust unit 30 acts as a condenser by supplying the compressed refrigerant. On the other hand, the air supply heat exchanger 21 provided in the air supply unit 20 acts as an evaporator.

The exhaust heat exchanger 31 acts as a condenser and the air supply heat exchanger 21 acts as an evaporator, thereby collecting the cold heat of the return air RA and cooling the outside air OA.

In winter, for example, when the indoor temperature of the building BLD is higher than the outdoor temperature due to a heater or the like, the compressor 10 supplies the compressed refrigerant to the air supply unit 20. The air supply heat exchanger 21 provided in the air supply unit 20 acts as a condenser by supplying the compressed refrigerant. On the other hand, the exhaust heat exchanger 31 provided in the exhaust unit 30 acts as an evaporator.

The air supply heat exchanger 21 acts as a condenser and the exhaust heat exchanger 31 acts as an evaporator, thereby collecting the heat of the return air RA and heating the outside air OA.

### [Control unit 60]

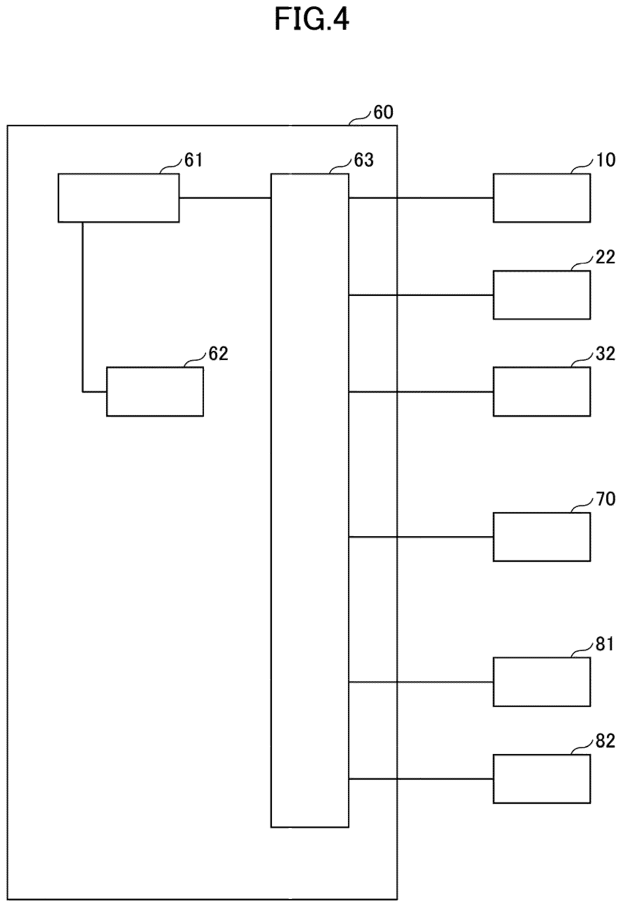

The control unit 60 controls the entire ventilation apparatus 1. FIG. 4 is a functional block diagram of the control unit 60 provided in the ventilation apparatus 1 according to the present embodiment. FIG. 4 also illustrates elements related to the control unit 60.

The control unit 60 is a control circuit including, for example, a processor such as a CPU (Central Processing Unit) and a memory. The function of the control unit 60 is implemented by causing the processor to operate according to a program stored readably in the memory. A specific example of the control unit 60 is a microcomputer. The control unit 60 may be a field programmable gate array (FPGA) or an application specific integrated circuit (ASIC).

The control unit 60 includes an arithmetic unit 61, a clock unit 62, and an external connection unit 63.

The arithmetic unit 61 controls the entire control unit 60. The arithmetic unit 61 also executes the soiling state estimation processing and the cleaning processing described later.

When the clock unit 62 receives an instruction from the arithmetic unit 61, the clock unit 62 outputs the time when the instruction is received to the arithmetic unit 61. The clock unit 62 is what is referred to as a real-time clock.

The external connection unit 63 communicates with a device or the like connected to the control unit 60.

As described above, the compressor 10, the fan 22, and the fan 32 are connected to the control unit 60. Further, a water supplying unit 70 that supplies water used for washing to the exhaust heat exchanger 31, is connected to the control unit 60 when a washing process is performed. Further, a human presence sensor 81 and an odor sensor 82 used in the soiling state estimation processing are connected to the control unit 60.

The devices connected to the control unit 60 are not limited to the above. Necessary devices may be connected appropriately according to the processing performed by the control unit 60.

### <Processing in the control unit 60>

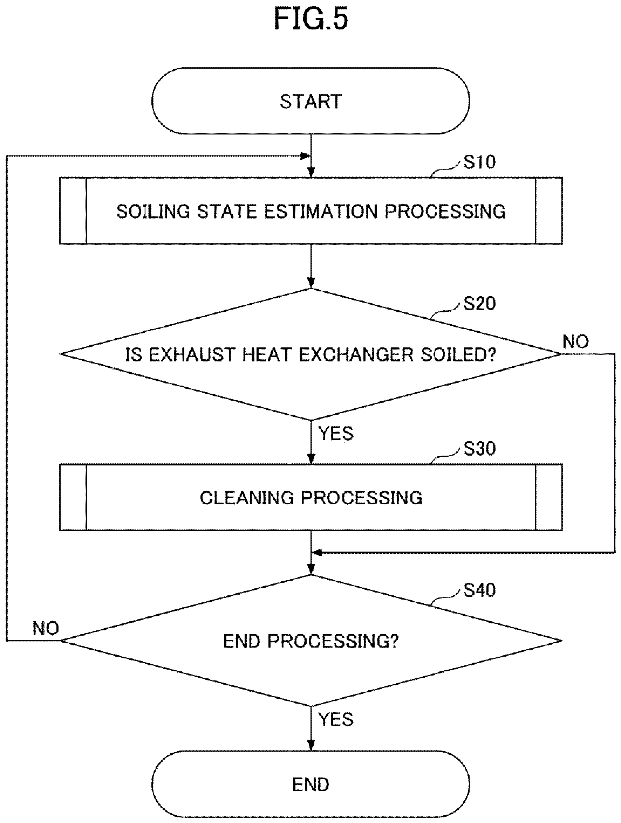

Processing of the ventilation apparatus 1 according to the present embodiment, more specifically, processing by the control unit 60 will be described. A control method of the ventilation apparatus 1 will be described by describing processing of the ventilation apparatus 1 according to the present embodiment. FIG. 5 is a flowchart illustrating processing of the ventilation apparatus 1 according to the present embodiment.

When the ventilation apparatus 1 starts operating, the control unit 60 performs soiling state estimation processing for estimating the soiling state of the exhaust heat exchanger 31 (step S10). Details of the soiling state estimation processing will be described later.

The control unit 60 determines whether the exhaust heat exchanger 31 is soiled (step S20) based on the results of the soiling state estimation processing (step S10). If the exhaust heat exchanger 31 is estimated to be soiled (YES in step S20), the control unit 60 performs a cleaning process to clean the exhaust heat exchanger 31 (step S30). If the exhaust heat exchanger 31 is estimated not to be soiled (NO in step S20), the control unit 60 proceeds to step S40.

In step S30, the control unit 60 performs cleaning of the exhaust heat exchanger 31. Details of the cleaning will be described later. When the cleaning processing (step S30) is completed, the control unit 60 proceeds to step S40.

The control unit 60 determines whether to end the processing (step S40). When the processing is to be ended (YES in step S40), the control unit 60 ends the processing. When the processing is not to be ended (NO in step S40), the control unit 60 returns to step S10 and repeats the processing.

### [Soiling state estimation processing]

Next, the soiling state estimation processing for estimating the soiling state of the exhaust heat exchanger 31 will be described in detail by listing specific examples.

### (First soiling state estimation processing)

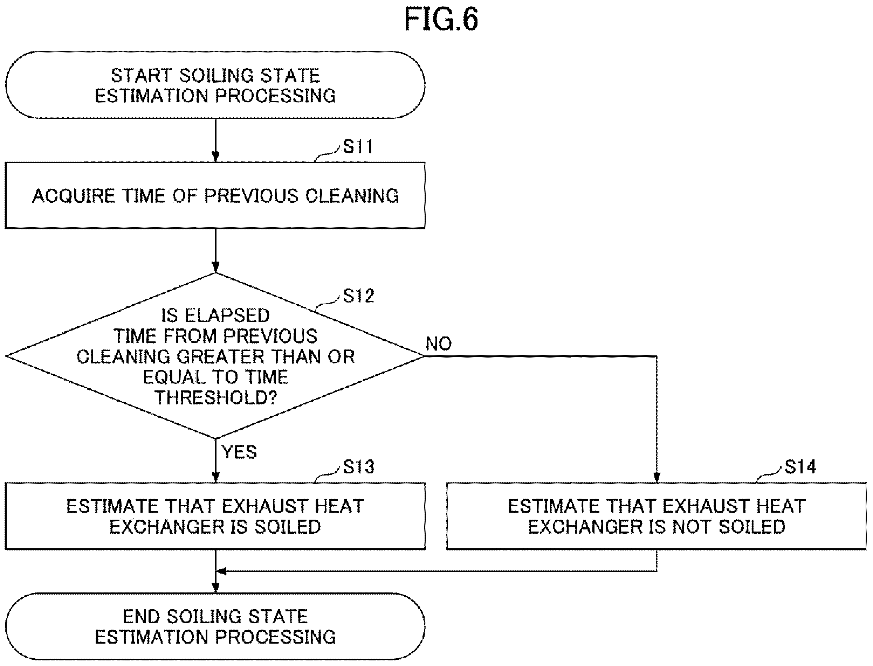

The first soiling state estimation processing is for estimating the soiling state of the exhaust heat exchanger 31 based on the elapsed time from the previous time the exhaust heat exchanger 31 was cleaned. When multiple cleaning operations are performed, the elapsed time from the previous time a cleaning operation was performed on the exhaust heat exchanger 31 is the elapsed time from the most recent (immediately preceding) cleaning operation performed on the exhaust heat exchanger 31. FIG. 6 is a flowchart illustrating the first soiling state estimation processing of the ventilation apparatus 1 according to the present embodiment. For example, it is conceivable that chemical substances or dust contained in the return air RA may adhere to the exhaust heat exchanger 31 or mold may propagate in the exhaust heat exchanger 31 after a period of time has elapsed after the cleaning operation. In the first soiling state estimation processing, if a predetermined period of time has elapsed from the previous time the exhaust heat exchanger 31 was cleaned, the exhaust heat exchanger 31 is estimated to be soiled.

When the first soiling state estimation processing is started, the control unit 60 acquires the time of the previous cleaning operation (step S11). For example, the arithmetic unit 61 of the control unit 60 acquires the previous cleaning time from a memory storing the previous cleaning time. When the ventilation apparatus 1 is operated for the first time, the time when the first operation is started is acquired as the previous cleaning time.

The control unit 60 determines whether the elapsed time from the previous cleaning operation is greater than or equal to a time threshold (step S12). The control unit 60 acquires the present time from the clock unit 62, for example, and calculates the elapsed time from the previous cleaning operation by using the previous cleaning time acquired in step S11.

If the elapsed time from the previous cleaning operation is greater than or equal to the time threshold (YES in step S12), the control unit 60 estimates that the exhaust heat exchanger 31 is soiled (step S13). Then, the control unit 60 ends the processing. On the other hand, if the elapsed time from the previous cleaning operation is less than the time threshold (NO in step S12), the control unit 60 estimates that the exhaust heat exchanger 31 is not soiled (step S14). Then, the control unit 60 ends the processing.

### (Second soiling state estimation processing)

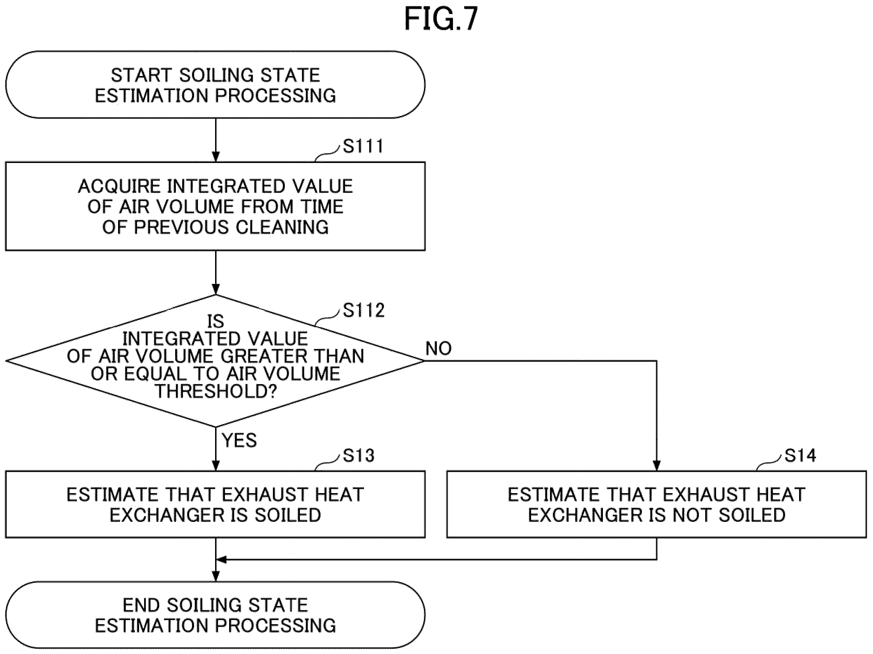

The second soiling state estimation processing is for estimating the soiling state of the exhaust heat exchanger 31 based on the amount of air passing through the exhaust heat exchanger 31 from the time when the exhaust heat exchanger 31 was previously cleaned. FIG. 7 is a flowchart illustrating the second soiling state estimation processing of the ventilation apparatus 1 according to the present embodiment. If the amount of air passing through the exhaust heat exchanger 31 after cleaning the exhaust heat exchanger 31 the previous time becomes great, it is considered that the exhaust heat exchanger 31 is soiled by the air passing therethrough. In the second soiling state estimation processing, if the integrated value of the air volume (amount of air passing through) after cleaning the exhaust heat exchanger 31 the previous time exceeds a predetermined threshold, the exhaust heat exchanger 31 is estimated to be soiled.

When the second soiling state estimation processing is started, the control unit 60 acquires the integrated value of the air volume passing through the exhaust heat exchanger 31 from the time of the previous cleaning operation (step S111). For example, the arithmetic unit 61 of the control unit 60 acquires, from the memory, the integrated value of the air volume passing through the exhaust heat exchanger 31 from the time of the previous cleaning operation to the present time. The acquired integrated value of the air volume passing through the exhaust heat exchanger 31 is integrated with the present air volume to acquire the integrated value of the air volume passing through the exhaust heat exchanger 31 from the time of the previous cleaning operation to the present time. For example, the air volume may be measured by providing an air volume sensor upstream or downstream of the exhaust heat exchanger 31.

The control unit 60 determines whether the integrated value of the air volume passing through the exhaust heat exchanger 31 after the previous cleaning operation is greater than or equal to the air volume threshold (step S112).

If the integrated value of the air volume passing through the exhaust heat exchanger 31 is greater than or equal to the air volume threshold (YES in step S112), the control unit 60 estimates that the exhaust heat exchanger 31 is soiled (step S13). Then, the control unit 60 ends the processing. On the other hand, if the integrated value of the air volume passing through the exhaust heat exchanger 31 is less than the air volume threshold (NO in step S112), the control unit 60 estimates that the exhaust heat exchanger 31 is not soiled (step S14). Then, the control unit 60 ends the processing.

### (Third soiling state estimation processing)

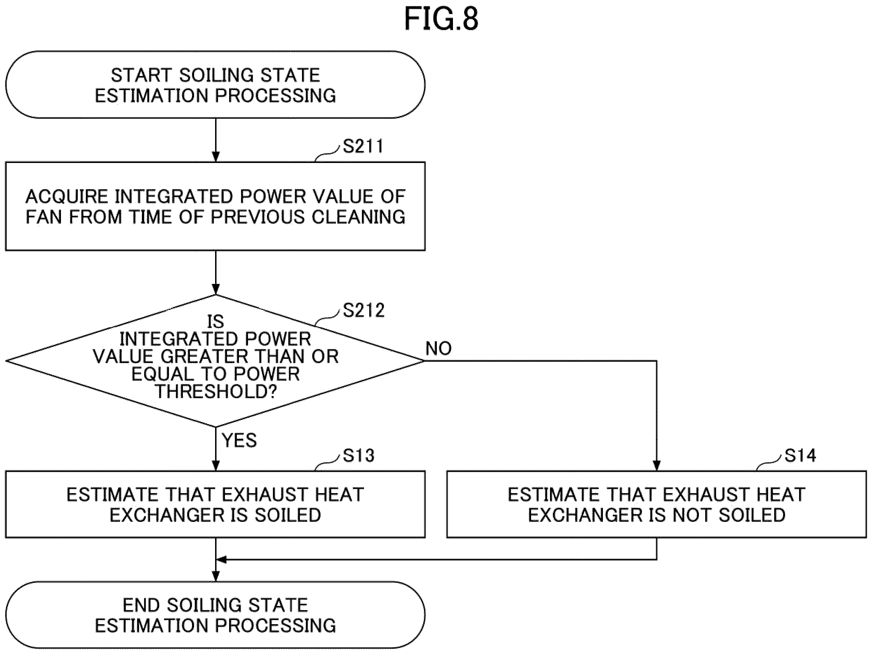

The third soiling state estimation processing is for estimating the soiling state of the exhaust heat exchanger 31 based on the amount of air passing through the exhaust heat exchanger 31 from the time when the exhaust heat exchanger 31 was previously cleaned. The third soiling state estimation processing is for estimating the amount of air passing through the exhaust heat exchanger 31 based on the integrated electric power value (integrated power) of the fan 32 of the exhaust unit 30. FIG. 8 is a flowchart illustrating the third soiling state estimation processing of the ventilation apparatus 1 according to the present embodiment. In the third soiling state estimation process, the amount of air passing through the exhaust heat exchanger 31 is estimated by using the power of the fan 32 after the exhaust heat exchanger 31 was previously cleaned, and if a predetermined amount of air has passed through the exhaust heat exchanger 31, the exhaust heat exchanger 31 is estimated to be soiled.

When the third soiling state estimation processing is started, the control unit 60 acquires the integrated power value (integrated power) of the fan 32 of the exhaust unit 30 from the time of the previous cleaning operation (step S211). For example, the arithmetic unit 61 of the control unit 60 acquires, from the memory, the integrated power value (integrated power) of the fan 32 of the exhaust unit 30 from the time of the previous cleaning operation to the present time. Then, the present power value of the fan 32 is integrated into the acquired integrated power value (integrated power) of the fan 32 of the exhaust unit 30, thereby acquiring the integrated power value (integrated power) of the fan 32 from the time of the previous cleaning operation.

The control unit 60 determines whether the integrated power value (integrated power) of the fan 32 of the exhaust unit 30 from the previous cleaning time is greater than or equal to the power threshold (step S212).

If the integrated power value (integrated power) of the fan 32 of the exhaust unit 30 from the previous cleaning time is greater than or equal to the power threshold (YES in step S212), the control unit 60 estimates that the exhaust heat exchanger 31 is soiled (step S13). Then, the control unit 60 ends the processing. On the other hand, if the integrated power value (integrated power) of the fan 32 of the exhaust unit 30 from the previous cleaning time is less than the power threshold (NO in step S212), the control unit 60 estimates that the exhaust heat exchanger 31 is not soiled (step S14). Then, the control unit 60 ends the processing.

### (Fourth soiling state estimation processing)

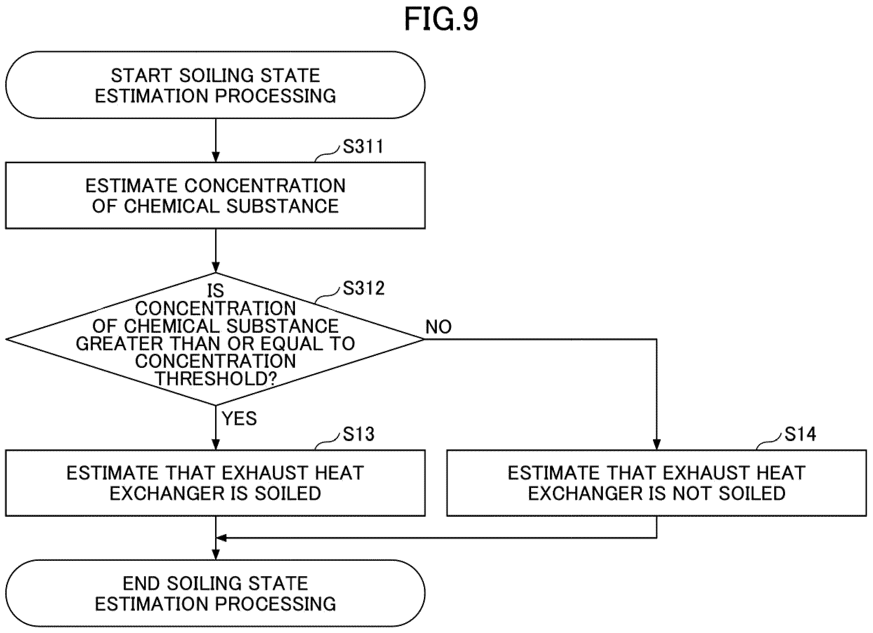

The fourth soiling state estimation processing is for estimating the concentration of the chemical substance and for estimating the soiling state of the exhaust heat exchanger 31 based on the estimated concentration of the chemical substance. FIG. 9 is a flowchart illustrating the fourth soiling state estimation processing of the ventilation apparatus 1 according to the present embodiment. For example, it is considered that the exhaust heat exchanger 31 is soiled when the concentration of a chemical substance such as ammonia or a volatile component of toilet cleaning fluid is high in the toilet. In the fourth soiling state estimation processing, it is assumed that the exhaust heat exchanger 31 is soiled when the concentration of a chemical substance in the air (in the return air RA) is high.

When the fourth soiling state estimation processing is started, the control unit 60 estimates the concentration of a chemical substance in the return air RA flowing into the exhaust heat exchanger 31 (step S311). For example, the arithmetic unit 61 of the control unit 60 estimates the concentration of a chemical substance in the return air RA based on the usage frequency of the toilet room WC. The usage frequency of the toilet room WC is obtained from, for example, the number of times of detection by the human presence sensor 81 provided in the toilet room WC. The human presence sensor 81 is, for example, a sensor used to automatically turn the lighting of the toilet room WC on and off. When the frequency of use of the toilet room WC is high, it is estimated that the concentration of the chemical substance in the return air RA is high. When the frequency of use of the toilet room WC is low, it is estimated that the concentration of the chemical substance in the return air RA is low.

The control unit 60 determines whether the estimated concentration of the chemical substance in the return air RA is greater than or equal to a concentration threshold (step S312).

If the estimated concentration of the chemical substance in the return air RA is greater than or equal to the concentration threshold (YES in step S312), the control unit 60 estimates that the exhaust heat exchanger 31 is soiled (step S13). Then, the control unit 60 ends the processing. On the other hand, if the estimated concentration of the chemical substance in the return air RA is less than the concentration threshold (NO in step S312), the control unit 60 estimates that the exhaust heat exchanger 31 is not soiled (step S14). Then, the control unit 60 ends the processing.

The estimation of the use frequency of the toilet room WC is not limited to the estimation using the number of times of detection by the human presence sensor 81. For example, the estimation may be based on the number of times hands are washed at the sink provided in the toilet room WC or the number of times of flushing the toilet bowl provided in the toilet room WC. The estimation of the frequency of use of the toilet room WC may be estimated by combining any two or all of the number of times of detection by the human presence sensor 81, the number of times of hand washing at the sink provided in the toilet room WC, and the number of times of flushing the toilet bowl provided in the toilet room WC.

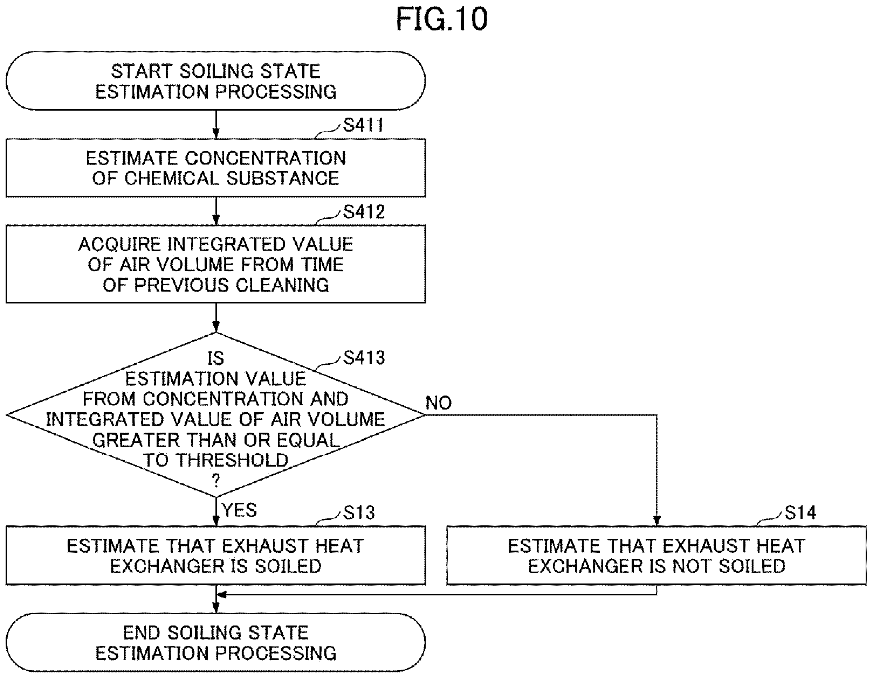

As illustrated in FIG. 10, the soiling state of the exhaust heat exchanger 31 may be estimated by combining the estimation of the concentration of chemical substances in the return air RA flowing into the exhaust heat exchanger 31 with the integrated value of the air volume passing through the exhaust heat exchanger 31.

The control unit 60 estimates the concentration of chemical substances in the return air RA flowing into the exhaust heat exchanger 31 in the same manner as in step S311 (step S411). Further, the control unit 60 acquires the integrated value of the air volume passing through the exhaust heat exchanger 31 from the previous cleaning time in the same manner as in step S111 (step S412). Then, the control unit 60 determines whether an estimated value calculated from the concentration of the chemical substance and the integrated value of the air volume is greater than or equal to a threshold value (step S413).

If the estimated value calculated from the concentration of the chemical substance and the integrated value of the air volume is greater than or equal to the threshold value (YES in step S413), the control unit 60 estimates that the exhaust heat exchanger 31 is soiled (step S13). Then, the control unit 60 ends the processing. On the other hand, if the estimated value calculated from the concentration of the chemical substance and the integrated value of the air volume is less than the threshold value (NO in step S413), the control unit 60 estimates that the exhaust heat exchanger 31 is not soiled (step S14). Then, the control unit 60 ends the processing.

For example, the integrated value of the product of the concentration of the chemical substance and the air volume is used as the estimated value calculated from the concentration of the chemical substance and the integrated value of the air volume. If the product of the concentration of the chemical substance and the air volume is used, for example, when the concentration of the chemical substance is low, the estimated value becomes smaller for the same air volume than when the concentration is high, and therefore, the cleaning processing becomes less frequent. On the other hand, when the concentration of the chemical substance is high, the estimated value becomes larger for the same air volume than when the concentration is low, and therefore, the cleaning process becomes more frequent.

In the soiling state estimation processing illustrated in FIG. 10, the integrated value of the air volume is used; however, instead of the integrated value of the air volume, for example, the time from the previous cleaning operation may be used.

The soiling state estimation processing for estimating the concentration of the chemical substance may be used not only when the return air RA from the toilet room WC is exhausted by the exhaust unit 30, but also when exhausting the return air RA in a space where the concentration of the chemical substance increases, such as a kitchen or a bathroom. The concentration of the chemical substance may be directly measured by a sensor or the like.

### (Fifth soiling state estimation processing)

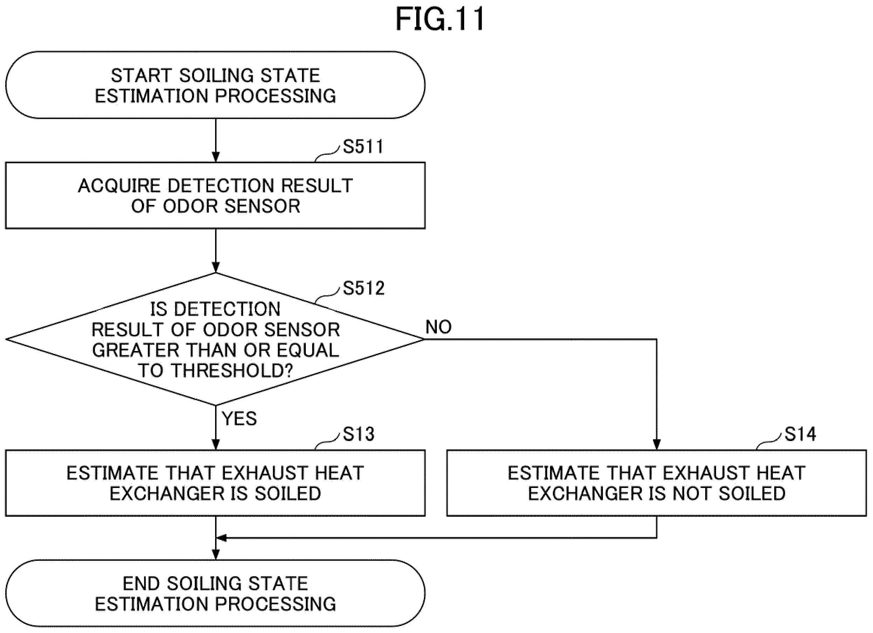

In the fifth soiling state estimation processing, the concentration of the chemical substance is estimated by the odor sensor 82, and the soiling state of the exhaust heat exchanger 31 is estimated based on the estimated concentration of the chemical substance. FIG. 11 is a flowchart illustrating the fifth soiling state estimation processing of the ventilation apparatus 1 according to the present embodiment.

When the fifth soiling state estimation processing is started, the control unit 60 acquires the detection result of the odor sensor 82 (step S511). The control unit 60 determines whether the detection result of the odor sensor 82 is greater than or equal to a threshold value (step S512).

If the detection result of the odor sensor 82 is greater than or equal to the threshold value (YES in step S512), the control unit 60 estimates that the exhaust heat exchanger 31 is soiled (step S13). Then, the control unit 60 ends the processing. On the other hand, if the detection result of the odor sensor 82 is less than the threshold value (NO in step S512), the control unit 60 estimates that the exhaust heat exchanger 31 is not soiled (step S14). Then, the control unit 60 ends the processing.

In the soiling state estimation processing, the soiling state estimation processing listed above may be combined. When the soiling state estimation processing is combined, for example, artificial intelligence-related technology may be used.

### [Cleaning processing]

Next, the cleaning processing for cleaning the exhaust heat exchanger 31 will be described in detail.

### (First cleaning processing)

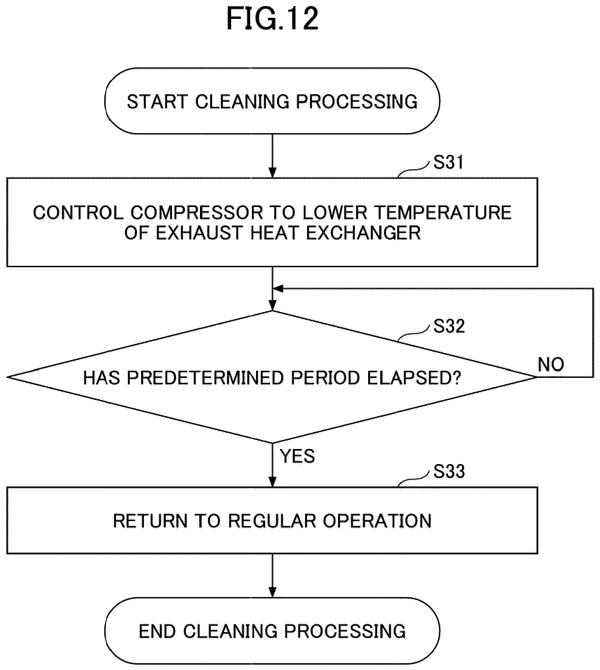

In the first cleaning processing, a refrigerant having a low temperature is supplied to the exhaust heat exchanger 31, the exhaust heat exchanger 31 is enabled to perform condensation, and the exhaust heat exchanger 31 is cleaned by the condensed water. FIG. 12 is a flowchart illustrating the first cleaning processing of the ventilation apparatus 1 according to the present embodiment.

When the first cleaning processing is started, the control unit 60 controls the compressor 10 (the refrigerant circuit 50) so as to lower the temperature of the exhaust heat exchanger 31 (step S31). The control unit 60 controls the compressor 10 (the refrigerant circuit 50) so as to lower the temperature of the exhaust heat exchanger 31, so that the exhaust heat exchanger 31 acts as an evaporator. The control unit 60 also controls the compressor 10 (the refrigerant circuit 50) so as to supply the cooled refrigerant to the exhaust heat exchanger 31 so that the exhaust heat exchanger 31 becomes at a temperature at which condensation occurs.

The control unit 60 waits for a predetermined period while the exhaust heat exchanger 31 is in a condensed state. Specifically, the control unit 60 determines whether the predetermined period has elapsed (step S32). When the predetermined period has elapsed (YES in step S32), the operation of the refrigerant circuit 50 is returned to regular operation (step S33). Then, the processing is ended. If the predetermined period has not elapsed (NO in step S32), the process in step S32 is repeated. Note that the predetermined period is the period necessary for cleaning the exhaust heat exchanger 31 by condensation.

When condensing the exhaust heat exchanger 31, the return air RA having high humidity, for example, the air of the bathroom BR, may be taken into the exhaust heat exchanger 31.

### (Second cleaning processing)

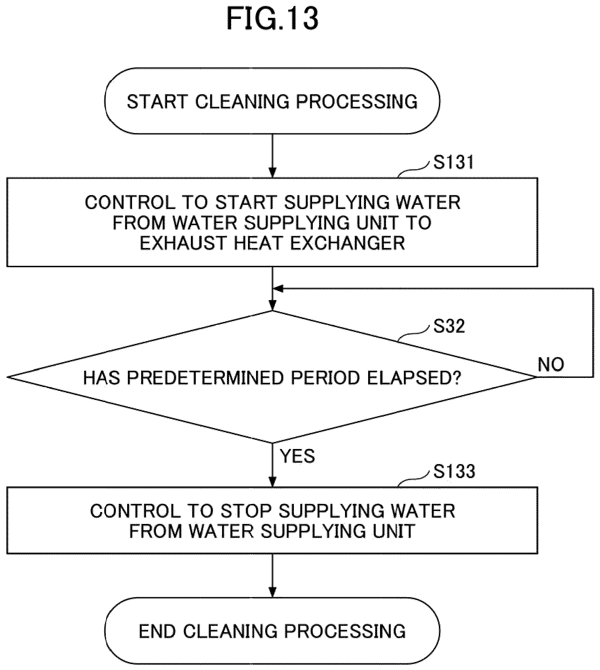

In the second cleaning processing, water is supplied to the exhaust heat exchanger 31 from a water supplying unit 70 provided above the exhaust heat exchanger 31, and the exhaust heat exchanger 31 is cleaned by the supplied water. FIG. 13 is a flowchart illustrating the second cleaning processing of the ventilation apparatus 1 according to the present embodiment.

When the second cleaning processing is started, the control unit 60 implements control to start the water supply from the water supplying unit 70 (step S131).

The control unit 60 waits for a predetermined period in a state where the water supplying unit 70 provided above the exhaust heat exchanger 31 supplies water to the exhaust heat exchanger 31. Specifically, the control unit 60 determines whether the predetermined period has elapsed (step S32). When the predetermined period has elapsed (YES in step S32), the control unit 60 implements control to stop the water supply from the water supplying unit 70 (step S133). Then, the processing is ended. If the predetermined period has not elapsed (NO in step S32), the processing in step S32 is repeated. The predetermined period is the period necessary for the exhaust heat exchanger 31 to be cleaned by the water supply.

The control unit 60 may combine the first cleaning processing and the second cleaning processing.

### <Configuration of the exhaust heat exchanger 31>

In the second cleaning processing, the exhaust heat exchanger 31 is cleaned by supplying water to the exhaust heat exchanger 31 from the water supplying unit 70 provided above the exhaust heat exchanger 31. The configuration of the exhaust heat exchanger 31 by which the exhaust heat exchanger 31 is easily cleaned by water when water is supplied from the water supplying unit 70 will be described below. FIG. 14 is a diagram for explaining the configuration of the exhaust heat exchanger 31 of the ventilation apparatus 1 according to the present embodiment. The air (return air RA) passing through the exhaust heat exchanger 31 flows in the transverse direction of the page of FIG. 14.

The exhaust heat exchanger 31 includes a plurality of plate-type fins 31f and a plurality of pipes 31p penetrating through the fins 31f.

When cleaning the exhaust heat exchanger 31, it is desirable that each of the plurality of fins 31f and each of the plurality of pipes 31p are supplied with enough water from the water supplying unit 70. In the exhaust heat exchanger 31 according to the present embodiment, each of the plurality of pipes 31p (the first pipe) is arranged so as to be shifted laterally as viewed from above with respect to all pipes 31p (the second pipes) that are positioned on the upper side among the plurality of pipes 31p.

As illustrated in FIG. 14, in the exhaust heat exchanger 31, the pipes 31p are arranged so as not to overlap each other in the vertical direction. Accordingly, water supplied from above is supplied to each of the pipes 31p, as illustrated by the arrowed lines. By supplying water to each of the pipes 31p, each of the plurality of pipes 31p is thoroughly cleaned by water supplied from above.

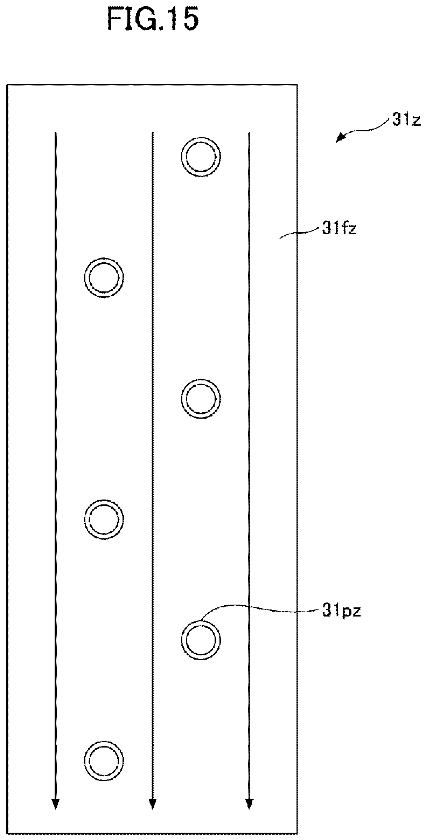

On the other hand, an exhaust heat exchanger 31z of a ventilation apparatus of a comparative example illustrated in FIG. 15 is provided with pipes 31pz overlapping in the vertical direction and penetrating through the fin 31fz. Water supplied from above slips past the pipes 31pz. Therefore, it is difficult for the pipes 31pz on the lower side to receive water and thus the pipes 31pz on the lower side are not cleaned sufficiently.

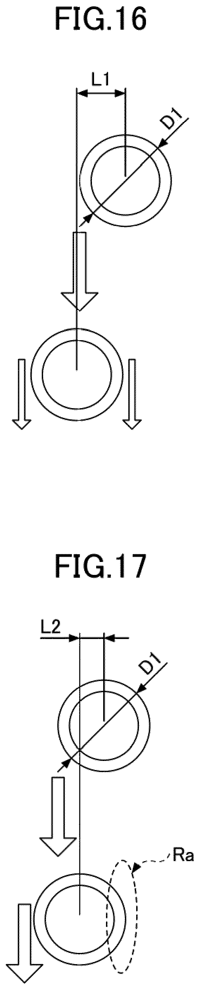

The cleaning state in the case where the pipes are aligned in the vertical direction up will be described below. FIG. 16 is a diagram explaining the cleaning state of the exhaust heat exchanger 31 of the ventilation apparatus according to the present embodiment. FIG. 17 is a diagram explaining the cleaning state of the exhaust heat exchanger of the ventilation apparatus of a comparative example.

With respect to the pipes that are arranged vertically, it is desirable that the center positions of the pipes are shifted from each other by at least greater than or equal to 1/2 of the outer diameter of each pipe. For example, with reference to FIG. 16, if the distance in the lateral direction between the center of the upper pipe and the center of the lower pipe is a distance L1 and the outer diameter of each pipe is an outer diameter D1, the following formula is preferably satisfied.

### L1 > D1/2

By satisfying the above formula, water can flow to both sides of the pipe at the lower pipe as illustrated in FIG. 16.

On the other hand, as illustrated in FIG. 17, assuming that the distance in the lateral direction between the center positions of the upper pipe and the lower pipe is a distance L2, and the outer diameter of each pipe is an outer diameter D1, the center positions of the upper and lower pipes are laterally shifted from each other by only at least less than or equal to 1/2 of the outer diameter of each pipe as indicated in the following formula. If the center positions of the upper and lower pipes are laterally shifted from each other by only at least less than or equal to 1/2 of the outer diameter of each pipe, it is difficult for water to flow to the part indicated by the area Ra, and the part of this pipe cannot be cleaned sufficiently.

### L2 < D1/2

Water is supplied from above the exhaust heat exchanger 31, and, therefore, the pipes 31p may be overlapping each other when viewed from the lateral direction of the paper surface of FIG. 14. The fin 31f may be tilted as illustrated by the fin 31f1 in FIG. 14. Depending on the soiling state, the configuration illustrated as a comparative example may be applied to the ventilation apparatus 1.

### <Configuration of the water supplying unit 70>

Although a nozzle may be provided as the water supplying unit 70, a configuration of the water supplying unit 70 suitable for the ventilation apparatus 1 according to the present embodiment will be described below.

### (First example of the water supplying unit 70)

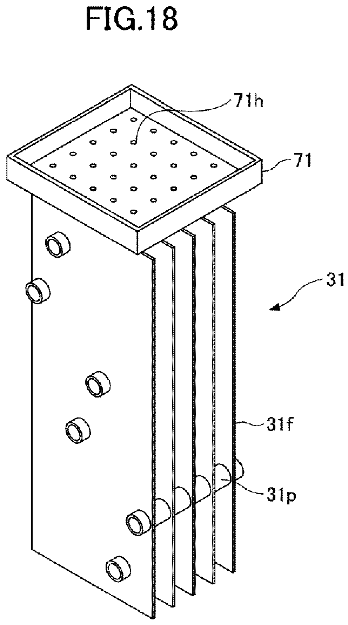

FIG. 18 is a diagram for explaining the structure of the water supplying unit for cleaning the exhaust heat exchanger of the ventilation apparatus according to the present embodiment. As a first example of the water supplying unit 70, a water supplying unit 71 will be described. The water supplying unit 71 is a tray provided with a plurality of water supply holes 71h. When water is supplied to the tray which is the water supplying unit 71, water is supplied from water supply holes 71h to the exhaust heat exchanger 31. The water supply holes 71h are provided according to the position of the pipes 31p.

### (Second example of the water supplying unit 70)

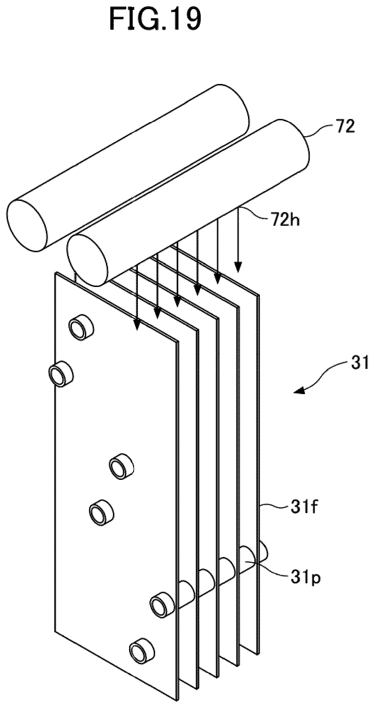

FIG. 19 is a diagram for explaining the structure of the water supplying unit for cleaning the exhaust heat exchanger of the ventilation apparatus according to the present embodiment. A water supplying unit 72 will be described as a second example of the water supplying unit 70. The water supplying unit 72 is a plurality of tubes provided with a plurality of water supply holes 72h. When water is supplied to the tubes serving as the water supplying unit 72, water is supplied from water supply holes 72h to the exhaust heat exchanger 31. The water supply holes are provided according to the positions of the pipes 31p.

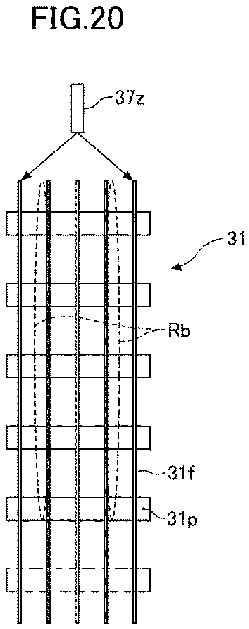

For example, as illustrated in FIG. 20, when water is supplied from the nozzle 37z, water is sprinkled from the nozzle 37z at a constant spread, and, therefore, there will be a region Rb in which water is hardly applied at the portion on the opposite of the fin 31f with respect to the nozzle 37z. According to the water supplying unit 71 and the water supplying unit 72, water can be supplied substantially vertically from above the exhaust heat exchanger 31, and, therefore, the exhaust heat exchanger 31 can be cleaned better.

Although an example in which water is supplied from the water supplying unit 70 has been described in the above description, for example, a cleaning liquid or the like may be supplied from the water supplying unit 70. Further, the cleaning liquid may be first supplied from the water supplying unit 70 to wash the exhaust heat exchanger, and then the cleaning liquid may be washed off by water flowing from the water supplying unit 70.

### <Function/effect>

According to the ventilation apparatus and the control method of the ventilation apparatus according to the present embodiment, soiling of the exhaust heat exchanger by the return air can be prevented. With the ventilation apparatus and the control method of the ventilation apparatus according to the present embodiment, the state of the soiling attached to the exhaust heat exchanger is estimated and the exhaust heat exchanger is cleaned when the exhaust heat exchanger is soiled. According to the ventilation apparatus and the control method of the ventilation apparatus according to the present embodiment, the corrosion deterioration of the exhaust heat exchanger can be prevented by cleaning the exhaust heat exchanger when the exhaust heat exchanger is soiled. The ventilation apparatus and the control method of the ventilation apparatus according to the present embodiment is particularly effective when the exhaust heat exchanger is used in a place where the concentration of corrosive chemical substances increases, such as a toilet. According to the ventilation apparatus and the control method of the ventilation apparatus according to the present embodiment, the exhaust heat exchanger can be cleaned when the exhaust heat exchanger is soiled and the exhaust heat exchanger needs to be cleaned.

Further, according to the ventilation apparatus and the control method of the ventilation apparatus according to the present embodiment, the heat transfer performance (air conditioning efficiency) can be maintained by cleaning the soiling on the surface of the exhaust heat exchanger. For example, applying a coating to the surface of the heat exchanger can be considered to prevent corrosion of the heat exchanger, but the manufacturing cost increases and the heat transfer performance decreases. According to the ventilation apparatus and the control method of the ventilation apparatus according to the present embodiment, the heat transfer performance (air conditioning efficiency) can be maintained to prevent corrosion.

Further, according to the ventilation apparatus and the control method of the ventilation apparatus according to the present embodiment, according to the structure of the heat exchanger and the structure of the water supplying unit, the portions deep inside the exhaust heat exchanger can be cleaned, especially the pipe through which the refrigerant passes, which is provided deep inside the exhaust heat exchanger.

The air supply heat exchanger 21 is an example of a first heat exchanger, the exhaust heat exchanger 31 is an example of a second heat exchanger, the air supply path P1 is an example of a first path, and the exhaust path P2 is an example of a second path.

In the above description, the ventilation apparatus 1 includes one air supply unit 20 and one exhaust unit 30, but the number of the air supply units 20 and the number of the exhaust units 30 are not limited to one unit. That is, either the air supply unit 20 or the exhaust unit 30 may be provided in plurality, or each of the air supply unit 20 and the exhaust unit 30 may be provided in plurality.

### <Modified example>

A ventilation apparatus 2 which is a modified example of the ventilation apparatus 1 according to the present embodiment will be described below. The ventilation apparatus 2 includes a plurality of exhaust units. More specifically, the ventilation apparatus 2 includes an exhaust unit 130 in addition to the exhaust unit 30 of the ventilation apparatus 1. The ventilation apparatus 2 includes an exhaust heat exchanger that requires cleaning, specifically, an exhaust heat exchanger 31, and an exhaust heat exchanger that does not require cleaning, specifically, an exhaust heat exchanger 131. An exhaust heat exchanger that requires cleaning and an exhaust heat exchanger that does not require cleaning are connected in parallel to the ventilation apparatus 2.

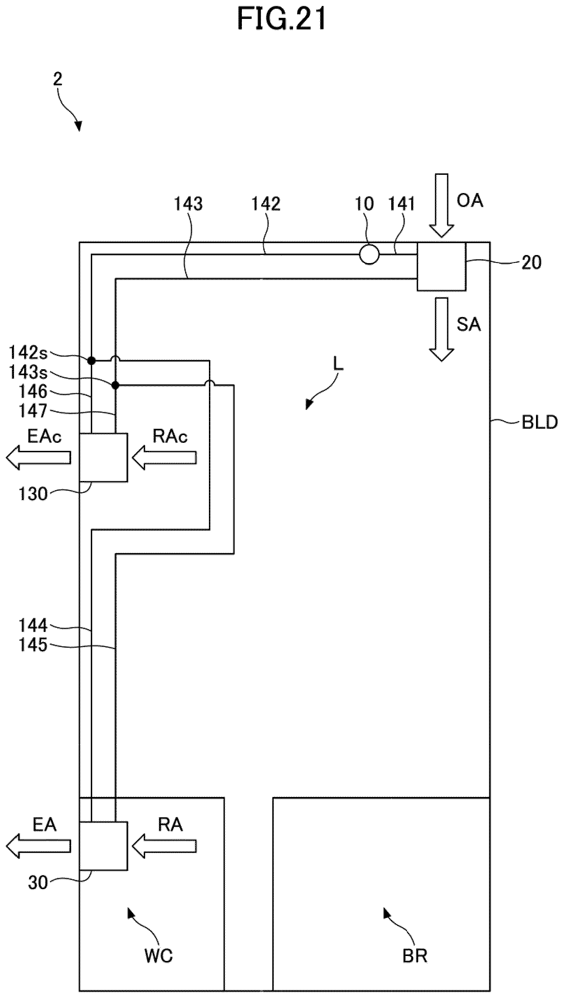

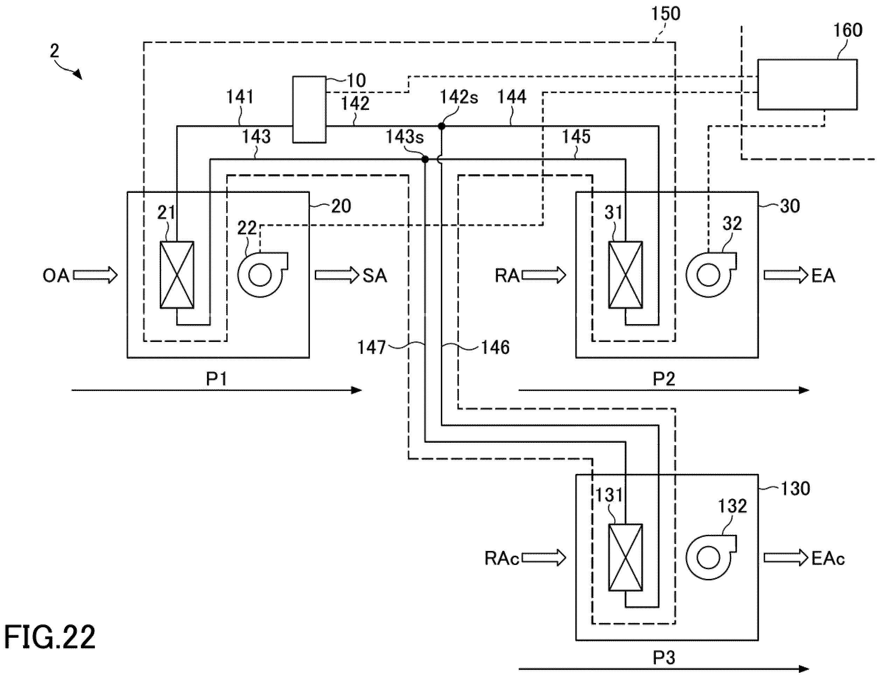

FIG. 21 is a plan view illustrating the use state of the ventilation apparatus 2, which is a modified example of the ventilation apparatus according to the present embodiment. FIG. 22 is a diagram illustrating a schematic configuration of the ventilation apparatus 2, which is a modified example of the ventilation apparatus according to the present embodiment.

The ventilation apparatus 2 according to the present embodiment includes the compressor 10, the air supply unit 20, the exhaust unit 30, and the exhaust unit 130. The ventilation apparatus 2 includes a refrigerant pipe 141, a refrigerant pipe 142, a refrigerant pipe 143, a refrigerant pipe 145, a refrigerant pipe 146, and a refrigerant pipe 147 (hereinafter, collectively referred to as the refrigerant pipe of the ventilation apparatus 2).

Further, the ventilation apparatus 2 includes a branch pipe 142s branching in three directions, to which the refrigerant pipe 142, the refrigerant pipe 144, and the refrigerant pipe 146 are connected. The ventilation apparatus 2 is provided with a branch pipe 143s branching in three directions, to which the refrigerant pipe 143, the refrigerant pipe 145, and the refrigerant pipe 147 are connected.

Further, the ventilation apparatus 2 is provided with a control unit 160 for controlling the entire ventilation apparatus 2 in place of the control unit 60 of the ventilation apparatus 1. The control unit 160 includes all the functions of the control unit 60.

The compressor 10, the air supply heat exchanger 21, the exhaust heat exchanger 31, the exhaust heat exchanger 131 of the exhaust unit 130, and the refrigerant pipe of the ventilation apparatus 2 may be collectively referred to as a refrigerant circuit 150.

The compressor 10 is connected to the air supply heat exchanger 21 through the refrigerant pipe 141. The compressor 10 is connected to the exhaust heat exchanger 31 through the refrigerant pipe 142, the branch pipe 142s, and the refrigerant pipe 144. Furthermore, the compressor 10 is connected to the exhaust heat exchanger 131 through the refrigerant pipe 142, the branch pipe 142s, and the refrigerant pipe 146.

The air supply heat exchanger 21 is connected to the exhaust heat exchanger 31 through the refrigerant pipe 143, the branch pipe 143s, and the refrigerant pipe 145. The air supply heat exchanger 21 is connected to the exhaust heat exchanger 131 through the refrigerant pipe 143, the branch pipe 143s, and the refrigerant pipe 147.

Among the plurality of exhaust units, the exhaust unit 30 is preferably provided in a place where indoor air is easily soiled, for example, a toilet or a kitchen. In FIG. 21, the exhaust unit 30 is provided in the toilet room WC. The control unit 160, similar to the control unit 60, estimates the soiling state of the exhaust heat exchanger 31 of the exhaust unit 30. The control unit 160, similar to the control unit 60, implements control to clean the exhaust heat exchanger 31 according to the result of estimating the soiling state.

On the other hand, the exhaust unit 130 among the plurality of exhaust units is provided in a place where indoor air is clean, for example, a living room. In FIG. 21, the exhaust unit 130 is provided in the living room L. The exhaust unit 130 exhausts clean air, and, therefore, the degree of soiling of the exhaust heat exchanger 131 is lower than that of the exhaust unit 30. In particular, the possibility of soiling by gas that causes the exhaust heat exchanger 131 to be corroded is low. Therefore, the control unit 160 does not have to perform estimation processing of estimating the soiling state of the exhaust heat exchanger 131 or cleaning processing of cleaning the exhaust heat exchanger 131.

The air taken in from the inside of the building BLD by the exhaust unit 130 is referred to as return air RAc. The air exhausted to the outside of the building BLD by the exhaust unit 130 is referred to as exhaust air EAc.

The air supply unit 20 and the exhaust unit 30 have the same configuration as those in the ventilation apparatus 1, and, therefore, the exhaust unit 130 will be described here without describing the air supply unit 20 and the exhaust unit 30.

### [Exhaust unit 130]

The exhaust unit 130 takes in the return air RAc from the inside of the building BLD, performs heat exchange between the taken in return air RAc and the refrigerant, and exhausts the return air RAc after the heat exchange to the outside of the building BLD as the exhaust air EAc. The exhaust unit 130 includes an exhaust heat exchanger 131 and a fan 132. The path in which the return air RAc, which is the indoor air of the building BLD, is exhausted to the outside of the building BLD as the exhaust air EAc via the exhaust unit 130, is referred to as the exhaust path P3.

The exhaust heat exchanger 131 exchanges heat between the return air RAc and the refrigerant. The exhaust heat exchanger 131 includes a plurality of plate-type fins and pipes through which the refrigerant flows and penetrating the fins (see FIGS. 14, 18, and 19).

The exhaust heat exchanger 131 is connected to the compressor 10 through the refrigerant pipe and to the air supply heat exchanger 21 provided in the air supply unit 20 through the refrigerant pipe, whereby the refrigerant flows to the pipe of the exhaust heat exchanger 131. As the return air RAc flows between the fins of the exhaust heat exchanger 131, heat exchange is performed between the return air RAc and the refrigerant flowing in the pipe of the exhaust heat exchanger 131.

The fan 132 blows the return air RAc, which is heat-exchanged in the exhaust heat exchanger 131, to the outside of the building BLD. The fan 132 is, for example, a centrifugal fan or an axial fan. The fan 132 is connected to the control unit 160. The control unit 160 controls the fan 132.

The return air RAc heat exchanged with the refrigerant by the exhaust heat exchanger 131 is blown to the outside of the building BLD as the exhaust air EAc by the fan 132.

With regard to the arrangement of the exhaust heat exchanger 131 and the fan 132, the return air RAc may be blown from the fan 132 to the exhaust heat exchanger 131.

### <Control by the control unit 160>

The exhaust heat exchanger 131 provided in the exhaust unit 130 installed in a place where the air is relatively clean such as a living room is unlikely to be soiled. On the other hand, the exhaust heat exchanger 31 provided in the exhaust unit 30 installed in a place containing corrosive gas such as a toilet is highly likely to be soiled. Therefore, the control unit 160 needs to clean the exhaust heat exchanger 31 more efficiently than the exhaust heat exchanger 131.

The control unit 160 controls the refrigerant circuit 150 such that the refrigerant evaporation temperature of the exhaust heat exchanger 31 provided in the exhaust unit 30 that needs to be cleaned, is lower than the refrigerant evaporation temperature of the exhaust heat exchanger 131 provided in the exhaust unit 130. The refrigerant evaporation temperature of the exhaust heat exchanger 31 provided in the exhaust unit 30 is lower than the refrigerant evaporation temperature of the exhaust heat exchanger 131 provided in the exhaust unit 130, so that condensation generated in the exhaust heat exchanger 31 is more induced. By further inducing condensation generated in the exhaust heat exchanger 31, the exhaust heat exchanger 31 that needs to be efficiently cleaned is efficiently cleaned.

In the above description, the ventilation apparatus 2 is provided with one exhaust heat exchanger that needs to be cleaned and one exhaust heat exchanger that does not need to be cleaned, but the number of each is not limited to one. For example, a plurality of exhaust heat exchangers 31 that require cleaning may be provided. A plurality of exhaust heat exchangers 131 that do not require cleaning may also be provided. A plurality of exhaust heat exchangers that do require cleaning and a plurality of exhaust heat exchangers that do not require cleaning may also be provided.

The exhaust path P3 is an example of a third path, and the exhaust heat exchanger 131 is an example of a third heat exchanger.

Although the embodiments have been described above, it will be understood that various changes in form and details can be made without departing from the object and scope of the claims.

### Reference Signs List

1, 2 ventilation apparatus
10 compressor
20 air supply unit
21 air supply heat exchanger
22 fan
30 exhaust unit
31, 131 exhaust heat exchanger
31f fin
31p pipe
32, 132 fan
41, 42, 43, 141, 142, 143, 144, 145, 146, 147 refrigerant pipe
50, 150 refrigerant circuit
60, 160 control unit
61 arithmetic unit
62 clock unit
63 external connection unit
70, 71, 72 water supplying unit
71h, 72h water supply holes
81 human presence sensor
82 odor Sensor
AT attic
BLD building
BR bathroom
L living room
WC toilet
EA, EAc exhaust air
OA outside air
RA, RAc return air
SA air supply

## Claims

1. A ventilation apparatus (1; 2) comprising:
a compressor(10);
a first heat exchanger (21) provided on a first path through which air is supplied from outdoors to indoors;
a second heat exchanger (31; 131) provided on a second path through which air is exhausted from the indoors to the outdoors;
a refrigerant circuit (50; 150) through which a refrigerant flows inside, the refrigerant circuit (50;150) being connected to the compressor, the first heat exchanger (21), and the second heat exchanger (31;131) by a refrigerant pipe; and
a control unit (60; 160) configured to estimate a soiling state of the second heat exchanger (31;131) and to implement control to clean the second heat exchanger (31;131) according to a result of estimating the soiling state
wherein the control unit (60; 160) is configured to estimate a concentration of a chemical substance in air, and to estimate the soiling state based on the estimated concentration.

2. The ventilation apparatus (1; 2) according to claim 1, wherein the control unit (60; 160) is configured to estimate the soiling state based on an elapsed time after cleaning the second heat exchanger (31; 131) previously.

3. The ventilation apparatus (1; 2) according to claim 1, wherein the control unit (60; 160) is configured to estimate the soiling state based on an amount of air passing through the second heat exchanger (31; 131) after cleaning the second heat exchanger (31; 131) previously.

4. The ventilation apparatus (1; 2) according to claim 1, further comprising:
a fan (32; 132) configured to blow air to the second heat exchanger, wherein
the control unit (60; 160) is configured to estimate the soiling state based on integrated power of the fan (32; 132) after cleaning the second heat exchanger (31; 131) previously.

5. The ventilation apparatus (1; 2) according to claim 1, wherein
the second path is connected to a toilet room provided in the indoors, and
the control unit (60; 160) is configured to estimate the concentration based on a usage frequency of using the toilet room.

6. The ventilation apparatus (1; 2) according to claim 5, wherein the control unit (60; 160) is configured to estimate the soiling state based on the concentration and an elapsed time after cleaning the second heat exchanger (31; 131) previously or an amount of air passing through the second heat exchanger (31; 131) after cleaning the second heat exchanger (31; 131) previously.

7. The ventilation apparatus (1; 2) according to claim 5 or 6, wherein the control unit (60; 160) is configured to estimate the usage frequency of using the toilet room based on a number of times of detection by a human presence sensor (81) provided in the toilet room or a number times of washing hands at a sink provided in the toilet room or a number of times of flushing a toilet bowl in the toilet room.

8. The ventilation apparatus (1; 2) according to claim 1, further comprising:
an odor sensor (82) provided on the second path, wherein
the control unit (60; 160) is configured to estimate the soiling state based on a result of detection by the odor sensor (82).

9. The ventilation apparatus (1; 2) according to any one of claims 1 to 8, wherein the control unit (60; 160) is configured to control the refrigerant circuit (50, 150) so as to cause condensation at the second heat exchanger (31; 131) when implementing control to clean the second heat exchanger (31; 131).

10. The ventilation apparatus (1; 2) according to any one of claims 1 to 9, further comprising:
a water supplying unit (70; 71; 72) above the second heat exchanger (31; 131), wherein
the control unit (60; 160) is configured to control water to be supplied from the water supplying unit (70; 71; 72) to the second heat exchanger (31; 131) when implementing control to clean the second heat exchanger (31; 131).

11. The ventilation apparatus (1; 2) according to claim 10, further comprising:
the second heat exchanger (31; 131) including a plurality of fins (31f) and a plurality of pipes (31p) through which the refrigerant flows, the plurality of pipes (31p) penetrating the plurality of fins (31f), wherein
a first pipe included in the plurality of pipes (31p) is arranged to be shifted in a lateral direction as viewed from above with respect to all second pipes included in the plurality of pipes that are positioned above the first pipe.

12. The ventilation apparatus (1; 2) according to claim 101 or 11, wherein the water supplying unit (70; 71; 72) is a tray provided with a plurality of water supply holes (71h; 72h).

13. The ventilation apparatus (1; 2) according to claim 10 or 11, wherein
the water supplying unit (70; 71; 72) includes a plurality of tubes, and
each of the plurality of tubes includes a plurality of water supply holes (71h; 72h).

14. The ventilation apparatus (1; 2) according to any one of claims 1 to 13, further comprising:
a third heat exchanger provided on a third path through which air is exhausted from the indoors to the outdoors, the third path being different from the second path.

15. The ventilation apparatus according to claim 14, wherein the control unit (60; 160) is configured to control a refrigerant evaporation temperature in the second heat exchanger (31;131) to be lower than a refrigerant evaporation temperature in the third heat exchanger.

16. A control method of a ventilation apparatus, the ventilation apparatus including:
a compressor (10);
a first heat exchanger (21) provided on a first path through which air is supplied from outdoors to indoors;
a second heat exchanger (31;131) provided on a second path through which air is exhausted from the indoors to the outdoors; and
a refrigerant circuit (50;150) through which a refrigerant flows inside, the refrigerant circuit (50;150) being connected to the compressor (10), the first heat exchanger (21), and the second heat exchanger (31;131) by a refrigerant pipe, wherein
the control method includes:
a step (S10) of estimating a soiling state of the second heat exchanger, said step comprising estimating a concentration of a chemical substance in air, and estimating the soiling state based on the estimated concentration, and
a step (S30) of implementing control to clean the second heat exchanger according to a result of estimating the soiling state.

## Patentansprüche

1. Belüftungsvorrichtung (1; 2), umfassend:
einen Verdichter (10);
einen ersten Wärmetauscher (21), der auf einem ersten Weg vorgesehen ist, durch den Luft von außen nach innen zugeführt wird;
einen zweiten Wärmetauscher (31; 131), der auf einem zweiten Weg vorgesehen ist, durch den Luft von innen nach außen abgegeben wird;
einen Kältemittelkreislauf (50; 150), durch den ein Kältemittel im Inneren strömt, wobei der Kältemittelkreislauf (50; 150) mit dem Verdichter, dem ersten Wärmetauscher (21) und dem zweiten Wärmetauscher (31; 131) durch eine Kältemittelleitung verbunden ist; und
eine Steuerungseinheit (60; 160), die konfiguriert ist, um einen Verschmutzungszustand des zweiten Wärmetauschers (31; 131) zu schätzen und eine Steuerung zu implementieren, um den zweiten Wärmetauscher (31; 131) gemäß einem Ergebnis des Schätzens des Verschmutzungszustands zu reinigen,
wobei die Steuerungseinheit (60; 160) konfiguriert ist, um eine Konzentration einer chemischen Substanz in Luft zu schätzen und den Verschmutzungszustand basierend auf der geschätzten Konzentration zu schätzen.

2. Belüftungsvorrichtung (1; 2) nach Anspruch 1, wobei die Steuerungseinheit (60; 160) konfiguriert ist, um den Verschmutzungszustand basierend auf einer verstrichenen Zeit nach dem vorherigen Reinigen des zweiten Wärmetauschers (31; 131) zu schätzen.

3. Belüftungsvorrichtung (1; 2) nach Anspruch 1, wobei die Steuerungseinheit (60; 160) konfiguriert ist, um den Verschmutzungszustand basierend auf einer Luftmenge zu schätzen, die nach dem vorherigen Reinigen des zweiten Wärmetauschers (31; 131) durch den zweiten Wärmetauscher (31; 131) strömt.

4. Belüftungsvorrichtung (1; 2) nach Anspruch 1, ferner umfassend:
ein Gebläse (32; 132), das konfiguriert ist, um Luft zu dem zweiten Wärmetauscher zu blasen, wobei
die Steuerungseinheit (60; 160) konfiguriert ist, um den Verschmutzungszustand basierend auf einer integrierten Leistung des Gebläses (32; 132) nach dem vorherigen Reinigen des zweiten Wärmetauschers (31; 131) zu schätzen.

5. Belüftungsvorrichtung (1; 2) nach Anspruch 1, wobei
der zweite Weg mit einem Toilettenraum verbunden ist, der in den Innenräumen vorgesehen ist, und
die Steuerungseinheit (60; 160) konfiguriert ist, um die Konzentration basierend auf einer Nutzungsfrequenz der Nutzung des Toilettenraums zu schätzen.

6. Belüftungsvorrichtung (1; 2) nach Anspruch 5, wobei die Steuerungseinheit (60; 160) konfiguriert ist, um den Verschmutzungszustand basierend auf der Konzentration und einer verstrichenen Zeit nach dem vorherigen Reinigen des zweiten Wärmetauschers (31; 131) oder einer Luftmenge zu schätzen, die nach dem vorherigen Reinigen des zweiten Wärmetauschers (31; 131) durch den zweiten Wärmetauscher (31; 131) strömt.

7. Belüftungsvorrichtung (1; 2) nach Anspruch 5 oder 6, wobei die Steuerungseinheit (60; 160) konfiguriert ist, um die Nutzungsfrequenz der Nutzung des Toilettenraums basierend auf einer Anzahl von Malen der Erfassung durch einen Sensor (81) für menschliche Präsenz , der in dem Toilettenraum vorgesehen ist, oder einer Anzahl von Malen des Waschens der Hände an einer Spüle, die in dem Toilettenraum vorgesehen ist, oder einer Anzahl von Malen des Spülens einer Toilettenschüssel in dem Toilettenraum zu schätzen.

8. Belüftungsvorrichtung (1; 2) nach Anspruch 1, ferner umfassend:
einen Geruchssensor (82), der auf dem zweiten Weg vorgesehen ist, wobei
die Steuerungseinheit (60; 160) konfiguriert ist, um den Verschmutzungszustand basierend auf einem Ergebnis der Erfassung durch den Geruchssensor (82) zu schätzen.

9. Belüftungsvorrichtung (1; 2) nach einem der Ansprüche 1 bis 8, wobei die Steuerungseinheit (60; 160) konfiguriert ist, um den Kältemittelkreislauf (50, 150) zu steuern, um Kondensation an dem zweiten Wärmetauscher (31; 131) zu bewirken, wenn eine Steuerung zum Reinigen des zweiten Wärmetauschers (31; 131) implementiert wird.

10. Belüftungsvorrichtung (1; 2) nach einem der Ansprüche 1 bis 9, ferner umfassend:
eine Wasserzufuhreinheit (70; 71; 72) über dem zweiten Wärmetauscher (31; 131), wobei
die Steuerungseinheit (60; 160) konfiguriert ist, um zu steuern, dass Wasser von der Wasserzufuhreinheit (70; 71; 72) dem zweiten Wärmetauscher (31; 131) zugeführt wird, wenn eine Steuerung zum Reinigen des zweiten Wärmetauschers (31; 131) implementiert wird.

11. Belüftungsvorrichtung (1; 2) nach Anspruch 10, ferner umfassend:
den zweiten Wärmetauscher (31; 131), der eine Vielzahl von Rippen (31f) und eine Vielzahl von Leitungen (31p) beinhaltet, durch die das Kältemittel strömt, wobei die Vielzahl von Leitungen (31p) die Vielzahl von Rippen (31f) durchdringt, wobei
eine erste Leitung, die in der Vielzahl von Leitungen (31p) enthalten ist, gestaltet ist, um in einer seitlichen Richtung, von oben betrachtet, in Bezug auf alle zweiten Leitungen, die in der Vielzahl von Leitungen enthalten sind, die über der ersten Leitung positioniert sind, verschoben zu werden.

12. Belüftungsvorrichtung (1; 2) nach Anspruch 10 oder 11, wobei die Wasserzufuhreinheit (70; 71; 72) eine Schale ist, die mit einer Vielzahl von Wasserzufuhrlöchern (71h; 72h) versehen ist.

13. Belüftungsvorrichtung (1; 2) nach Anspruch 10 oder 11, wobei
die Wasserzufuhreinheit (70; 71; 72) eine Vielzahl von Rohren beinhaltet, und
jedes der Vielzahl von Rohren eine Vielzahl von Wasserzufuhrlöchern (71h; 72h) beinhaltet.

14. Belüftungsvorrichtung (1; 2) nach einem der Ansprüche 1 bis 13, ferner umfassend:
einen dritten Wärmetauscher, der auf einem dritten Weg vorgesehen ist, durch den Luft von innen nach außen abgegeben wird, wobei sich der dritte Weg von dem zweiten Weg unterscheidet.

15. Belüftungsvorrichtung nach Anspruch 14, wobei die Steuerungseinheit (60; 160) konfiguriert ist, um eine Kältemittelverdampfungstemperatur in dem zweiten Wärmetauscher (31; 131) zu steuern, um niedriger als eine Kältemittelverdampfungstemperatur in dem dritten Wärmetauscher zu sein.

16. Steuerungsverfahren für eine Belüftungsvorrichtung, wobei die Belüftungsvorrichtung umfasst:
einen Verdichter (10);
einen ersten Wärmetauscher (21), der auf einem ersten Weg vorgesehen ist, durch den Luft von außen nach innen zugeführt wird;
einen zweiten Wärmetauscher (31; 131), der auf einem zweiten Weg vorgesehen ist, durch den Luft von innen nach außen abgegeben wird; und
einen Kältemittelkreislauf (50; 150), durch den ein Kältemittel im Inneren strömt, wobei der Kältemittelkreislauf (50; 150) mit dem Verdichter (10), dem ersten Wärmetauscher (21) und dem zweiten Wärmetauscher (31; 131) durch eine Kältemittelleitung verbunden ist, wobei
das Steuerungsverfahren umfasst:
einen Schritt (S10) des Schätzens eines Verschmutzungszustands des zweiten Wärmetauschers, wobei der Schritt das Schätzen einer Konzentration einer chemischen Substanz in Luft und das Schätzen des Verschmutzungszustands basierend auf der geschätzten Konzentration umfasst, und
einen Schritt (S30) des Implementierens einer Steuerung zum Reinigen des zweiten Wärmetauschers gemäß einem Ergebnis des Schätzens des Verschmutzungszustands.

## Revendications

1. Appareil de ventilation (1 ; 2) comprenant :
un compresseur (10) ;
un premier échangeur de chaleur (21) agencé sur un premier chemin par lequel l'air est acheminé de l'extérieur à l'intérieur ;
un deuxième échangeur de chaleur (31 ; 131) agencé sur un deuxième chemin par lequel l'air est évacué de l'intérieur à l'extérieur ;
un circuit de réfrigérant (50 ; 150) par lequel un réfrigérant s'écoule à l'intérieur, le circuit de réfrigérant (50 ; 150) étant raccordé au compresseur, au premier échangeur de chaleur (21), et au deuxième échangeur de chaleur (31 ; 131) par un tuyau de réfrigérant ; et
un module de commande (60 ; 160) configuré pour estimer un état de contamination du deuxième échangeur de chaleur (31 ; 131), et mettre en œuvre une commande de nettoyage du deuxième échangeur de chaleur (31 ; 131) en fonction d'un résultat de l'estimation de l'état de contamination
le module de commande (60 ; 160) étant configuré pour estimer une concentration d'une substance chimique dans l'air, et estimer l'état de contamination d'après la concentration estimée.

2. Appareil de ventilation (1 ; 2) selon la revendication 1, le module de commande (60 ; 160) étant configuré pour estimer l'état de contamination en fonction du temps écoulé après le nettoyage du deuxième échangeur de chaleur (31 ; 131) effectué précédemment.

3. Appareil de ventilation (1 ; 2) selon la revendication 1, le module de commande (60 ; 160) étant configuré pour estimer l'état de contamination en fonction de la quantité d'air traversant le deuxième échangeur de chaleur (31 ; 131) à la suite du nettoyage du deuxième échangeur de chaleur (31 ; 131) effectué précédemment.

4. Appareil de ventilation (1 ; 2) selon la revendication 1, comprenant en outre :
une soufflante (32 ; 132) configurée pour souffler de l'air vers le deuxième échangeur de chaleur, et
le module de commande (60 ; 160) étant configuré pour estimer l'état de contamination en fonction de la puissance intégrée de la soufflante (32 ; 132) à la suite du nettoyage du deuxième échangeur de chaleur (31 ; 131) effectué précédemment.

5. Appareil de ventilation (1 ; 2) selon la revendication 1,
le deuxième chemin étant raccordé à un cabinet de toilette agencé à l'intérieur, et
le module de commande (60 ; 160) étant configuré pour estimer l'état de contamination en fonction d'une fréquence d'utilisation du cabinet de toilette.

6. Appareil de ventilation (1 ; 2) selon la revendication 5, le module de commande (60 ; 160) étant configuré pour estimer l'état de contamination en fonction de la concentration et d'un temps écoulé après le nettoyage du deuxième échangeur de chaleur (31 ; 131) effectué précédemment ou d'une quantité d'air passant à travers le deuxième échangeur de chaleur (31 ; 131) à la suite du nettoyage du deuxième échangeur de chaleur (31 ; 131) effectué précédemment.

7. Appareil de ventilation (1 ; 2) selon la revendication 5 ou 6, le module de commande (60 ; 160) étant configuré pour estimer la fréquence d'utilisation du cabinet de toilette d'après un nombre de détections effectuées par un capteur de présence humaine (81) agencé dans le cabinet de toilette, ou du nombre d'occurrences de lavage des mains à un lavabo agencé dans le cabinet de toilette, ou d'un nombre d'occurrences d'actionnement de la chasse d'eau dans le cabinet de toilette.

8. Appareil de ventilation (1 ; 2) selon la revendication 1, comprenant en outre :
un détecteur d'odeurs (82) agencé sur le deuxième chemin,
le module de commande (60 ; 160) étant configuré pour estimer l'état de contamination d'après un résultat de détection par le détecteur d'odeurs (82).

9. Appareil de ventilation (1 ; 2) selon une quelconque des revendications 1 à 8, le module de commande (60 ; 160) étant configuré pour contrôler le circuit de réfrigérant (50 ; 150) de façon à donner lieu à donner lieu à de la condensation dans le deuxième échangeur de chaleur (31 ; 131) lors de la mise en œuvre de la commande de nettoyage du deuxième échangeur de chaleur (31 ; 131).

10. Appareil de ventilation (1 ; 2) selon une quelconque des revendications 1 à 9, comprenant en outre
un dispositif de distribution d'eau (70 ; 71 ; 72) situé au-dessus du deuxième échangeur de chaleur (31 ; 131),
le module de commande (60 ; 160) étant configuré pour contrôler l'eau devant être amenée du dispositif de distribution d'eau (70 ; 71 ; 72) au deuxième échangeur de chaleur (31 ; 131) lors de la mise en œuvre de la commande de nettoyage du deuxième échangeur de chaleur (31 ; 131).

11. Appareil de ventilation (1 ; 2) selon la revendication 10, comprenant en outre :
le deuxième échangeur de chaleur (31 ; 131) comprenant une pluralité d'ailettes (31f) et une pluralité de tuyaux (31p) par lesquels s'écoule le réfrigérant, la pluralité de tuyaux (31p) pénétrant dans la pluralité d'ailettes (31f),
un premier tuyau compris dans la pluralité de tuyaux (31p) étant agencé pour être déplacé latéralement vu du dessus relativement à tous les deuxièmes tuyaux compris dans la pluralité de tuyaux positionnés au-dessus du premier tuyau.

12. Appareil de ventilation (1 ; 2) selon la revendication 10 ou 11, le dispositif de distribution d'eau (70 ; 71 ; 72) étant un plateau doté d'une pluralité d'orifices de distribution d'eau (71h ; 72h).

13. Appareil de ventilation (1 ; 2) selon la revendication 10 ou 11,
le dispositif de distribution d'eau (70 ; 71 ; 72) comprenant une pluralité de tubes, et
chaque tube de la pluralité de tubes comprenant une pluralité d'orifices de distribution d'eau (71h ; 72h).

14. Appareil de ventilation (1 ; 2) selon une quelconque des revendications 1 à 13, comprenant en outre :
un troisième échangeur de chaleur agencé sur un troisième chemin à travers lequel l'air est refoulé de l'intérieur à l'extérieur, le troisième chemin étant différent du deuxième chemin.

15. Appareil de ventilation selon la revendication 14, le module de commande (60 ; 160) étant configuré pour contrôler qu'une température d'évaporation du réfrigérant dans le deuxième échangeur de chaleur (31 ; 131) est inférieure à une température d'évaporation du réfrigérant dans le troisième échangeur de chaleur

16. Procédé de contrôle d'un appareil de ventilation, l'appareil de ventilation comprenant :
un compresseur (10) ;
un premier échangeur de chaleur (21) agencé sur un premier chemin par lequel l'air est acheminé de l'extérieur à l'intérieur ;
un deuxième échangeur de chaleur (31 ; 131) agencé sur un deuxième chemin par lequel l'air est évacué de l'intérieur à l'extérieur ; et
un circuit de réfrigérant (50 ; 150) par lequel un réfrigérant s'écoule à l'intérieur, le circuit de réfrigérant (50 ; 150) étant raccordé au compresseur (10), au premier échangeur de chaleur (21), et au deuxième échangeur de chaleur (31 ; 131) par un tuyau de réfrigérant ;
le procédé de contrôle comprenant :
une étape (S10) d'estimation de l'état de contamination du deuxième échangeur de chaleur, ladite étape comprenant l'estimation d'une concentration d'une substance chimique dans l'air, et l'estimation de l'état de contamination d'après la concentration estimée, et
une étape (S30) de mise en œuvre d'une commande de nettoyage du deuxième échangeur de chaleur d'après un résultat de l'estimation de l'état de contamination.
